# EUROPEAN PATENT APPLICATION

(11) **EP 4 808 207 A1**
(43) Date of publication of application: **16.09.2026**
(21) Application number: 24893352.5
(22) Date of filing: 15.11.2024
(51) Int. Cl.: H04W 28/24

(54) **COMMUNICATION METHOD AND APPARATUS**

(30) Priority: 22.11.2023 CN 202311582413
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN)
(74) Representative: Maiwald GmbH
(86) International application number: PCT/CN2024/132383
(87) International publication number: WO 2025/108194

(57) **Abstract**

Embodiments of this application provide a communication method and apparatus, and relate to the field of communication technologies. The method includes: A terminal device receives first indication information indicating first alternative QoS configuration information, and determines a first RRC parameter based on the first indication information and a first association relationship, which is equivalent to that the terminal device may adjust an RRC parameter based on the first alternative QoS configuration information, so that the RRC parameter can be adjusted in a more timely manner, thereby improving air interface transmission quality.

## Description

### CROSS-REFERENCE TO RELATED APPLICATIONS

This application claims priority to Chinese Patent Application No. 202311582413.0, filed with the China National Intellectual Property Administration on November 22, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In an artificial intelligence (artificial intelligence, AI) service (for example, cloud gaming or virtual reality (virtual reality, VR)), a terminal device and an application server may collaboratively execute an AI task, to implement the AI service. The terminal device may run an application (application, APP) and may access the application server through the application and a network. A radio access network (radio access network, RAN) in the network may determine a task assignment point between the terminal device and the cloud server based on dynamic quality of service (quality of service, QoS/Qos) switching. A quality of service profile (quality of service profile, QoS Profile) (or referred to as a quality of service parameter set) may be used to describe communication QoS requirements of different task assignment points. In this way, a network side may determine a QoS profile, and notify an application layer of the terminal device or an application layer of the application server of information about the determined QoS profile, to indicate the application layer to execute a task based on a task assignment point or the like corresponding to the QoS profile.

A 5th generation system (5th generation system, 5GS) introduces an alternative quality of service (alternative quality of service, alternative QoS) mechanism. In this mechanism, in addition to a normal QoS profile, one or more alternative QoS profiles (alternative QoS profiles) may be provided for a QoS flow (flow). When a communication QoS requirement indicated by the normal QoS profile of the QoS flow cannot be met, the RAN may select a corresponding alternative QoS profile from the one or more alternative QoS profiles to serve the corresponding QoS flow, and notify an AF and the terminal device of an index (index) of the selected alternative QoS profile. In this way, the application layers corresponding to the terminal device and the AF may adjust a corresponding task division mode or service traffic mode. After the task division mode or the service traffic is adjusted, a service traffic feature changes. When the service traffic feature changes, the application layer needs to indicate the change of the service traffic feature to the RAN, so that the RAN adjusts a radio resource control (radio resource control, RRC) parameter between the RAN and the terminal device, to make the RRC parameter adapt to the change of the service traffic, thereby ensuring service data transmission. However, in this manner, the RAN adjusts the RRC parameter only after determining the task division mode or the service traffic, and a transmission procedure in which the application layer notifies the RAN is long, making the RAN adjust the RRC parameter late, and also making it impossible to perform transmission in time based on an adjusted RRC parameter. In conclusion, this manner causes poor RRC parameter adjustment timeliness.

### SUMMARY

Embodiments of this application provide a communication method and apparatus, to improve RRC parameter adjustment timeliness, and improve reliability of air interface transmission.

According to a first aspect, an embodiment of this application provides a communication method. The method may be performed by a terminal device, or may be performed by a software or hardware module (such as a chip) in a terminal device. For ease of description, an example in which the method is performed by the terminal device is used below for description. The method includes: receiving first indication information, and determining a first RRC parameter based on the first indication information and a first association relationship. The first indication information indicates first alternative quality of service configuration information, the first alternative quality of service configuration information indicates one or more communication indicators that a first quality of service flow needs to meet, the first association relationship indicates an association relationship between one or more pieces of alternative quality of service configuration information and one or more RRC parameters, the one or more pieces of alternative quality of service configuration information include the first alternative quality of service configuration information, and the one or more RRC parameters include the first RRC parameter.

It should be understood that the first alternative quality of service configuration information may be considered as quality of service configuration information re-determined in a process of transmitting the first quality of service flow, or may be considered as adjusted quality of service configuration information. The first alternative quality of service configuration information may include an alternative quality of service profile, an alternative quality of service parameter set, or the like. The first RRC parameter may be considered as an RRC parameter obtained by performing adjustment based on adjustment of quality of service configuration information, or may be considered as an adjusted RRC parameter, a new RRC parameter, or the like. The first RRC parameter may also be referred to as a first RRC parameter group, and may be used for air interface transmission. The first RRC parameter may include one or more parameters. This is not limited. The first RRC parameter includes at least one of the following: a semi-persistent scheduling (or semi-static scheduling) parameter, a configured grant scheduling resource parameter, or a discontinuous reception configuration parameter.

In this embodiment of this application, after determining the first alternative quality of service configuration information, the terminal device may trigger RRC parameter adjustment, and the terminal device adjusts an RRC parameter earlier. In addition, the terminal device may determine (or adjust) the RRC parameter by itself, and an adjustment triggering process does not require a large number of transmission procedures on a network side, so that the terminal device can adjust the RRC parameter earlier. In conclusion, the RRC parameter can be determined in a more timely manner. In this way, the terminal device can communicate with the network side in a more timely manner by using an adjusted RRC parameter, thereby helping improve quality and effect of air interface transmission, and also improving user experience.

In a possible implementation, the first association relationship may be preconfigured or predefined for the terminal device. In this way, an interaction between the terminal device and the network side can be reduced. Alternatively, the terminal device may receive second indication information from an access network device, where the second indication information indicates the first association relationship; and the terminal device may obtain the first association relationship based on the second indication information. In this way, the access network device can more flexibly indicate the first association relationship, thereby helping improve accuracy of the first association relationship obtained by the terminal device.

In a possible implementation, the terminal device may send data of the first quality of service flow to the access network device. The data of the first quality of service flow may indicate, carry, or include first traffic-associated information, and the first traffic-associated information includes experienced quality of service information and/or service feature information. The experienced quality of service information indicates an actual transmission parameter of the first quality of service flow in a historical time period. The service feature information indicates an attribute of a first service corresponding to the first quality of service flow. For example, the service feature information may be an importance degree (or a priority) of the data of the first quality of service. In this way, the access network device may determine the first QoS configuration information based on the first traffic-associated information, which may alternatively be described as that the first traffic-associated information is used to determine the first QoS configuration information.

It should be understood that the historical time period (or historical duration) may be any time period between a start moment at which the data of the first quality of service flow starts to be generated and a current moment. This is not specifically limited. For example, the historical time period may be a time period between the start moment at which the terminal device starts to generate the data of the first quality of service flow and the current moment, or may be a time period between a moment at which the terminal device starts to send the data of the first quality of service flow and a moment at which the access network device receives the data of the first quality of service flow.

In the foregoing implementation, the traffic-associated information is carried in the data of the first quality of service flow, so that a number of interactions between the terminal device and the access network device can be relatively reduced. In addition, the traffic-associated information reflects a service attribute and/or an actual data transmission status, so that the first alternative QoS configuration information that can be determined by the access network device based on the traffic-associated information better meets an actual service requirement, thereby helping improve quality and/or effect of subsequent service processing.

In a possible implementation, the terminal device may send assistance information of the terminal device to the access network device, where the assistance information indicates resource usage of the terminal device. In this way, the access network device may determine the first QoS configuration information based on the assistance information, which may alternatively be described as that the assistance information is used to determine the first QoS configuration information.

It should be understood that the assistance information may indicate, for example, usage of a hardware resource and/or a software resource of the terminal device.

In the foregoing implementation, the access network device can adjust, based on an actual situation of the terminal device that is indicated by the assistance information, QoS configuration information corresponding to a service, thereby ensuring service processing effect and avoiding resource exhaustion or the like of the terminal device.

In a possible implementation, the method further includes: determining a first service parameter based on the first alternative quality of service configuration information, where the first service parameter is a parameter of the first service corresponding to the first quality of service flow.

In the foregoing implementation, the terminal device can further determine the first service parameter based on the first alternative quality of service configuration information, so that the terminal device can adjust the service parameter in time based on the alternative quality of service configuration information, to ensure service execution effect.

In a possible implementation, a manner of determining the first service parameter is: determining the first service parameter based on the first alternative quality of service configuration information and a second association relationship, where the second association relationship indicates an association relationship between at least one piece of alternative quality of service configuration information and at least one service parameter, the at least one piece of alternative quality of service configuration information includes the first alternative quality of service configuration information, and the at least one service parameter includes the first service parameter.

It should be understood that the second association relationship may be received by the terminal device from the network side (for example, from a task management function (task management function, TMF), where the TMF may be deployed in the access network device or a core network, or may be deployed relatively independently of the access network device, or the like), or may be preconfigured or predefined in the terminal device.

In the foregoing implementation, a manner of determining the first service parameter is provided, and the terminal device does not need to perform a large amount of computation, making the manner of determining the first service parameter relatively simple. In addition, different alternative quality of service configuration information may correspond to different service parameters. In this way, the terminal device can determine a service parameter that better matches the first alternative quality of service configuration, thereby helping improve service execution effect.

In a possible implementation, the first association relationship includes one or more identifiers and the association relationship with the one or more radio resource control parameters, and the one or more identifiers are identifiers of the one or more pieces of alternative quality of service configuration information.

It should be understood that an identifier of one piece of alternative quality of service configuration information includes at least one of the following: a quality of service flow identifier corresponding to the one piece of alternative quality of service configuration information, an index of the one piece of alternative quality of service configuration information, or an index of at least one communication indicator in one or more communication indicators indicated by the one piece of alternative quality of service configuration information. The index of the at least one communication indicator in the one or more communication indicators indicated by the one piece of alternative quality of service configuration information may be a value of the at least one communication indicator, a value range to which a value of the at least one communication indicator belongs, or the like.

In the foregoing implementation, the first association relationship may be represented by using an identifier of alternative quality of service configuration information and a radio resource control parameter, so that an amount of data included in the first association relationship can be reduced.

According to a second aspect, an embodiment of this application provides a communication method. The method may be performed by an access network device, or may be performed by a hardware module (such as a chip) or a software module in an access network device, for example, a CU or a DU in the access network device. For ease of description, an example in which the method is performed by the access network device is used below for description. The method includes: determining first alternative quality of service configuration information from at least one piece of alternative quality of service configuration information of a first quality of service flow, where the first alternative quality of service configuration information is quality of service configuration information re-determined by the first quality of service flow, and indicates one or more communication indicators that the first quality of service flow needs to meet; determining a first RRC parameter based on the first alternative quality of service configuration information and a first association relationship, where the first association relationship indicates an association relationship between one or more pieces of alternative quality of service configuration information and one or more RRC parameters, the one or more pieces of alternative quality of service configuration information include the first alternative quality of service configuration information, and the one or more RRC parameters include the first RRC parameter; and sending first indication information, where the first indication information indicates the first alternative quality of service configuration information.

In a possible implementation, the method further includes: sending third indication information to a terminal device, where the third indication information indicates the first RRC parameter.

It should be understood that the third indication information and the first indication information may be carried in a same message, or may be carried in different messages. This is not limited. In addition, the access network device may send the third indication information and the first indication information in any sequence. For example, the access network device may send the first indication information and the third indication information at the same time.

In the foregoing implementation, the terminal device may directly obtain the first RRC parameter based on the third indication information, so that a process in which the terminal device determines an RRC parameter can be simplified.

In a possible implementation, determining the first alternative quality of service configuration information from the at least one piece of alternative quality of service configuration information of the first quality of service flow includes: receiving data of the first quality of service flow, where the data of the first quality of service flow includes first traffic-associated information, the first traffic-associated information includes experienced quality of service flow information and/or service feature information, the experienced quality of service information indicates an actual transmission parameter of the first quality of service flow in a historical time period, and the service feature information indicates an attribute of a first service corresponding to the first quality of service flow; and determining the first alternative quality of service configuration information based on the first traffic-associated information.

In a possible implementation, determining the first alternative quality of service configuration information based on the first traffic-associated information includes: determining the first alternative quality of service configuration information based on the first traffic-associated information and a third association relationship, where the third association relationship includes an association relationship between at least one piece of alternative quality of service configuration information and at least one piece of traffic-associated information, the at least one piece of alternative quality of service configuration information includes the first alternative quality of service configuration information, and the at least one piece of traffic-associated information includes the first traffic-associated information; or determining the first alternative quality of service configuration information based on the first traffic-associated information, network status information, and the at least one piece of alternative quality of service configuration information, where the network status information includes information about one or more communication indicators that a network reaches or can support.

In a possible implementation, determining the first alternative quality of service configuration information from the at least one piece of alternative quality of service configuration information of the first quality of service flow includes: receiving assistance information of the terminal device, where the assistance information indicates resource usage of the terminal device; and determining the first alternative quality of service configuration information based on the assistance information, network status information, and the at least one piece of alternative quality of service configuration information, where the network status information includes information about one or more communication indicators that a network reaches or can support.

In a possible implementation, the first association relationship includes one or more identifiers and the association relationship with the one or more RRC parameters, and the one or more identifiers are identifiers of the one or more pieces of alternative quality of service configuration information.

In a possible implementation, an identifier of one piece of alternative quality of service configuration information includes at least one of the following: a quality of service flow identifier corresponding to the one piece of alternative quality of service configuration information, an index of the one piece of alternative quality of service configuration information, or an index of at least one communication indicator in one or more communication indicators indicated by the one piece of alternative quality of service configuration information.

In a possible implementation, the first RRC parameter includes at least one of the following: a semi-persistent scheduling parameter, a configured grant scheduling resource parameter, or a discontinuous reception configuration parameter.

According to a third aspect, an embodiment of this application provides a communication method. The method may be performed by any device on a network side, for example, an access network device or a core network device in a core network, or another network element, for example, a TMF, or an apparatus or a device having a function of a TMF. The TMF may be deployed relatively independently of the access network device, or may be deployed in an access network or the core network. This is not limited. For ease of description, an example in which the method is performed by the TMF is used below for description. The method includes: receiving at least one piece of alternative quality of service configuration information corresponding to a first quality of service flow, where the alternative quality of service configuration information indicates one or more communication indicators that the first quality of service flow needs to meet; determining a third association relationship, where the third association relationship includes an association relationship between at least one piece of alternative quality of service configuration information and at least one piece of traffic-associated information, one piece of traffic-associated information includes experienced quality of service flow information and/or service feature information, the experienced quality of service information indicates an actual transmission parameter of the first quality of service flow in a historical time period, and the service feature information indicates an attribute of a first service corresponding to the first quality of service flow; and sending fourth indication information, where the fourth indication information indicates the third association relationship. The third association relationship may be used to determine or adjust QoS configuration information, for example, may be used by an access network device to determine first alternative QoS configuration information.

In this embodiment of this application, an association relationship between alternative quality of service and traffic-associated information may be preconfigured on the network side, so that the network can dynamically adjust alternative quality of service configuration in real time based on detected traffic-associated information, to ensure end-to-end quality of service of an application service as much as possible, and relatively reduce an interaction between network side devices.

In a possible implementation, one piece of alternative quality of service configuration information includes at least one of an alternative quality of service parameter, an input data rate, and an output data rate corresponding to each of a plurality of subtasks, and the plurality of subtasks belong to a task included in the first service.

According to a fourth aspect, an embodiment of this application provides a communication apparatus. The communication apparatus may be the terminal device in the first aspect, or a hardware module or a software module in the terminal device, or an apparatus having a function of the terminal device. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to receive first indication information; and the processing module is configured to determine a first RRC parameter based on the first indication information and a first association relationship.

Optionally, the communication apparatus may further perform content in any possible implementation of the first aspect, and details are not described herein again.

According to a fifth aspect, an embodiment of this application provides a communication apparatus. The communication apparatus may be the access network device in the second aspect, a hardware module or a software module in the access network device, or an apparatus having a function of the access network device. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the processing module is configured to determine first alternative quality of service configuration information from at least one piece of alternative quality of service configuration information of a first quality of service flow, and determine a first RRC parameter based on the first alternative quality of service configuration information and a first association relationship; and the transceiver module is configured to send first indication information.

Optionally, the communication apparatus may further perform content in any possible implementation of the second aspect, and details are not described herein again.

According to a sixth aspect, an embodiment of this application provides a communication apparatus. The communication apparatus may be the TMF in the third aspect, a hardware module or a software module in the TMF, or an apparatus having a function of the TMF. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the transceiver module is configured to receive at least one piece of alternative quality of service configuration information corresponding to a first quality of service flow; the processing module is configured to determine a third association relationship; and the transceiver module is further configured to send fourth indication information.

Optionally, the communication apparatus may further perform content in any possible implementation of the third aspect, and details are not described herein again.

According to a seventh aspect, an embodiment of this application provides a communication apparatus, including a processor and an interface circuit. The interface circuit is configured to: receive a signal from another communication apparatus other than the communication apparatus and transmit the signal to the processor, or send a signal from the processor to another communication apparatus other than the communication apparatus; and the processor is configured to implement the method according to the first aspect, the second aspect, or the third aspect, or any possible implementation by using a logic circuit or by executing code instructions.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, that is, a computer device supporting a wireless communication function. Specifically, the wireless communication device may be a terminal device such as a smartphone, or may be a radio access network device such as a base station.

In another implementation, the communication apparatus may be a part of components in the wireless communication device, for example, an integrated circuit product such as a system chip or a communication chip. The system chip may also be referred to as a system on chip (system on chip, SoC), or briefly referred to as a SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. During physical implementation, some or all chips in the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

According to an eighth aspect, an embodiment of this application provides a communication apparatus. The communication apparatus includes a processor and a storage. The storage is configured to store one or more computer programs, the one or more computer programs include computer-executable instructions, and when the communication apparatus runs, the processor executes the one or more computer programs stored in the storage, so that the communication apparatus performs the method according to the first aspect, the second aspect, or the third aspect, or any possible implementation.

Optionally, the communication apparatus further includes other components, for example, an antenna, an input/output module, and an interface. These components may be hardware, software, or a combination of software and hardware.

According to a ninth aspect, an embodiment of this application provides a chip system. The chip system includes a processor and an interface. The processor is configured to invoke instructions from the interface and run the instructions, and when the processor executes the instructions, the method according to the first aspect, the second aspect, or the third aspect, or any possible implementation is implemented.

According to a tenth aspect, an embodiment of this application provides a computer-readable storage medium. The computer-readable storage medium is configured to store a computer program or instructions. When the computer program or the instructions are run, the method according to the first aspect, the second aspect, or the third aspect, or any possible implementation is implemented.

According to an eleventh aspect, an embodiment of this application provides a computer program product including instructions. When the instructions are run on a computer, the method according to the first aspect, the second aspect, or the third aspect, or any possible implementation is implemented.

For beneficial effects of any one of the technical solutions in the second aspect to the eleventh aspect, refer to the beneficial effects of the corresponding technical solution in the first aspect. Repeated content is not described herein again.

### BRIEF DESCRIPTION OF DRAWINGS

FIG. 1 is a diagram of a scenario to which an embodiment of this application is applicable;
FIG. 2 is a diagram of another scenario to which an embodiment of this application is applicable;
FIG. 3 is a schematic flowchart of adjusting an RRC parameter;
FIG. 4 is a diagram of still another scenario to which an embodiment of this application is applicable;
FIG. 5 is a diagram of yet another scenario to which an embodiment of this application is applicable;
FIG. 6 is a diagram of a structure of a communication system to which an embodiment of this application is applicable;
FIG. 7 is a diagram of a structure of another communication system to which an embodiment of this application is applicable;
FIG. 8 is a diagram of a structure of still another communication system to which an embodiment of this application is applicable;
FIG. 9 is a diagram of a communication method according to an embodiment of this application;
FIG. 10 is a diagram of another communication method according to an embodiment of this application;
FIG. 11 is a diagram of still another communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of still another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

For ease of understanding, the following describes some terms in embodiments of this application by using examples.
1. QoS configuration information serves a QoS flow, and is used to describe one or more communication indicators that the QoS flow needs to meet.

The QoS configuration information includes a QoS profile (QoS profile) of the QoS flow. The QoS profile may indicate a QoS parameter (or parameter set) of the QoS flow. The QoS parameter of the QoS flow includes at least one of a QoS profile index (index), a guaranteed flow bit rate (guaranteed flow bit rate, GFBR), a guaranteed flow bit rate (guaranteed bit rate, GBR), a packet delay budget (packet delay budget, PDB), a packet error rate (packet error rate, PER), an uplink/downlink (uplink/downlink, UL/DL) channel status, or a maximum data burst volume (maximum data burst volume, MDBV). In this case, the GFBR, the PDB, the PER, the UL/DL, the MDBV, and the like all may be one or more communication indicators. It should be understood that, in some cases (for example, the QoS configuration information includes only the QoS profile of the QoS flow), the QoS configuration information may also be referred to as a QoS profile, a QoS configuration parameter set, a QoS parameter set, or the like.

In addition to the QoS profile (QoS profile) of the QoS flow, optionally, the QoS configuration information further includes a QoS parameter corresponding to each of a plurality of subtasks corresponding to a task, and the like. A QoS parameter of one subtask may include at least one of a throughput, an input data rate, and an output data rate of the subtask. In this case, the throughput, the input data rate, the output data rate, and the like corresponding to the subtask may also be one or more communication indicators. The input/output data rate or throughput represents a communication QoS requirement of input/output data of the task, and may be further extended to include a communication QoS parameter 5G QoS identifier (5G QoS identifier) defined by NR, for example, an uplink/downlink (uplink/downlink, UL/DL) PDB, a GFBR, and a maximum data burst volume (maximum data burst volume, MDBV).

Alternative QoS configuration information is optional QoS profile information. For content of the alternative QoS configuration information, refer to the content of the QoS configuration information.

2. An RRC parameter (parameter) may also be referred to as an RRC parameter group (group), an air interface transmission parameter, an air interface transmission configuration, or the like, and is used for air interface transmission. For example, the RRC parameter includes a semi-persistent scheduling (or semi-static scheduling) (semi-persistent scheduling, SPS) parameter, a configured grant (configured grant, CG) resource parameter, or a discontinuous reception (discontinuous reception, DRX) configuration parameter. Discontinuous reception may also be referred to as non-continuous reception.

A CG includes a time domain resource, a frequency domain resource, and/or the like. The time domain resource may include, for example, a configured grant period (which may be referred to as a CG period). The frequency domain resource may include, for example, a number of CGs, specifically, for example, a number of configured grant resource blocks (resource block, RB). The CG may be for uplink transmission. A network side activates one uplink grant for a terminal device. If the terminal device does not receive deactivation, the terminal device may always use resources specified in a 1^{st} uplink grant to perform uplink transmission, and the terminal device may send data on a physical uplink shared channel (physical uplink shared channel, PUSCH) by using these configured grant resources. A new radio (new radio, NR) protocol supports two types of CG resource configurations. One is to configure a CG time domain resource, including a periodicity, an offset, a start symbol and a length of a PUSCH, and a number of repetitions of the CG resource, by using RRC signaling. The other is to configure a periodicity and a number of repetitions by using RRC signaling (specifically, for example, IE ConfiguredGrantConfig), and configure the other parameters by using downlink control information (downlink control information, DCI) signaling (IE ConfiguredGrantConfig), including indicating uplink configured grant activation and deactivation.

SPS is used to enable one user to use same time-frequency resources in a specified semi-persistent scheduling periodicity (for example, 20 ms) until the resources are released. For example, a downlink SPS parameter includes a radio network temporary identifier (Radio Network Temporary Identifier, cs-RNTI), nrof hybrid automatic repeat request (Hybrid Automatic Repeat Request, HARQ)-Processes, harq-ProcID-Offset, and a periodicity (periodicity). The cs-RNTI is an RNTI for receiving DCI activation/deactivation/retransmission, the nrofHARQ-Processes is a number of HARQs that can be supported by SPS, the harq-ProID-Offset is used to determine a parameter for downlink SPS HARQ ID computing, and the periodicity is a transmission periodicity parameter of downlink SPS. The SPS parameter includes, for example, an SPS period.

DRX is used for discontinuous message reception. After DRX is activated, the terminal device may suspend PDCCH listening and temporarily turn off a receiver when there is no service, thereby reducing power consumption. The DRX configuration parameter includes DRX entry and exit (such as a DRX start point selection/DRX start offset), a DRX cycle (classified into a long cycle and a short cycle), a number of subframes that a DRX cycle lasts, and a number of repetitions of a short DRX cycle (short cycle timer). The DRX parameter includes, for example, the DRX cycle.

3. Network status information may also be referred to as status information of a communication network, status information of a network, or the like, and is information about one or more communication indicators that the network can reach or support, or may be information about one or more actual communication indicators of the network. The network status information includes at least one of the following: an uplink/downlink channel status, a modulation and coding scheme (modulation and coding scheme, MCS), a number of physical resource blocks (physical resource block, PRB), a guaranteed flow bit rate of the network, a packet delay budget of the network, a current packet error rate of the network, a transmission rate of the network, a guaranteed transmission data size of the network, channel state information of the network, buffer status report information of the network, or congestion status information of the network. Correspondingly, the one or more communication indicators that the network status information can reach or support include at least one of the uplink/downlink channel status, the MCS, the number of PRBs, the guaranteed flow bit rate, the packet delay budget, the packet error rate, the transmission rate, the guaranteed transmission data size, the channel state information, a buffer status report, or a congestion status. The congestion status information may be information related to a queue length of a data packet buffered in a layer 1 or layer 2 protocol stack of an access network device, for example, information related to a buffer status report (buffer status report, BSR). It should be understood that network status information may be different at different moments, and the network status information in embodiments of this application may be current or present network status information that is measured or detected.

4. A service parameter means some parameters related to a task corresponding to a service. The task is some or all tasks that need to be executed to implement the service. The service parameter may include one or more of a task implementation mode (for example, a device-cloud collaboration mode), a task assignment (task assignment) mode, a subtask assignment (subtask assignment) mode (which may be referred to as a task allocation mode or scheduling mode), a parameter for transmitting service-related data, and the like. The parameter for transmitting service-related data includes, for example, at least one of a bit rate, a frame size, a resolution, or a frame rate. The device-cloud collaboration mode may be considered as a specific implementation of the task assignment mode. When a terminal device and an application server collaborate to implement a task, content of the task assignment mode may be the same as content of the device-cloud collaboration mode. For example, the device-cloud collaboration mode or the task assignment mode may indicate a task division mode between the terminal device and the application server. For example, the device-cloud collaboration mode or the task assignment mode may indicate to enable or disable reflection rendering, enable or disable a dynamic diffuse global illumination (dynamic diffuse global illumination, DDGI) rendering function, or the like.

5. A protocol data unit (protocol data unit, PDU) session (session) is a carrier of a PDU service. The PDU session is used to connect a terminal device and an external data network (data network, DN) to exchange a service data packet. Once a PDU session is established, a data transmission channel between the terminal device and the DN is established. A transmission process of a user plane tunnel of the PDU session includes a process between the terminal device and an access network, a process between the access network and a user plane function (user plane function, UPF), a process between the access network and a UPF-DN, and the like. A PDU session in 5G includes at least one of attributes such as single network slice selection assistance information (single network slice selection assistance information, S-NSSAI), a data network name (data network name, DNN), a PDU session type (type), a service and session continuity mode (service and session continuity mode, SSC Mode), a PDU session ID, user plane security enforcement information (user plane security enforcement information), and a multi-access PDU connectivity service (multi-access PDU connectivity service).

It should be understood that, with continuous evolution of a standard, the alternative QoS configuration information, the RRC parameter, and the like may have other names. This is not specifically limited in embodiments of this application.

In embodiments of this application, unless otherwise specified, a number of nouns represents "a singular noun or a plural noun", that is, "one or more". In addition, "at least one" means one or more, and "a plurality of" means two or more. Moreover, "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. For example, A/B indicates A or B. In addition, "at least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

An AI service may be a service implemented based on an AI model, and include a video rendering service represented by cloud gaming and VR, terminal visual cognition, augmented reality/mixed reality (augmented reality/mixed reality, AR/MR), and the like. AI tasks related to the AI service include, for example, collecting user behavior data such as an image, a video, a posture, or a voice and surrounding environment data by a terminal device such as a smartphone, a vehicle, or a robot by using a sensor such as a radar, a camera, a handle, or a microphone, and then performing an operation such as voice or image recognition or video processing by using an AI model.

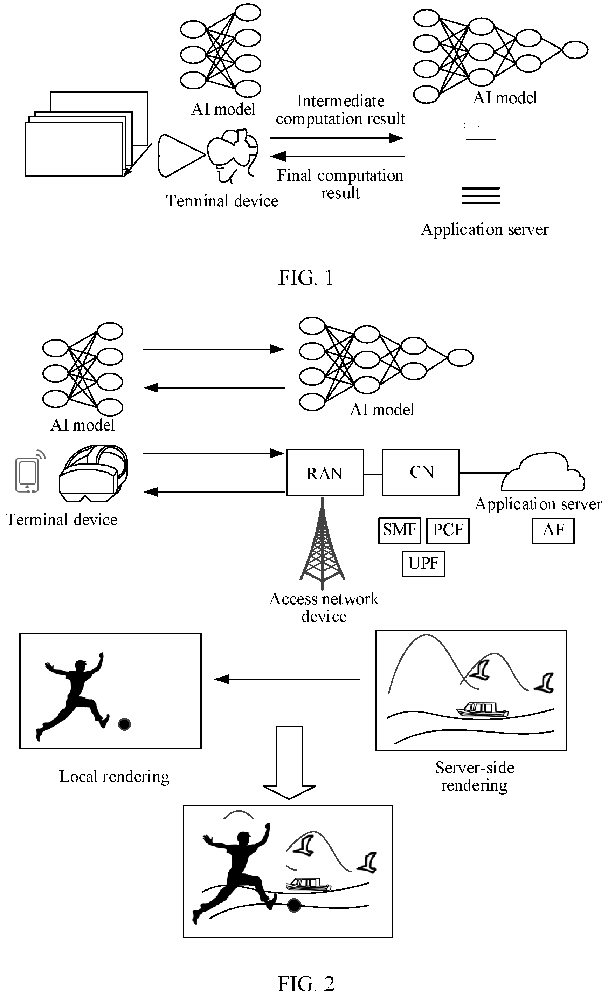

An AI task may be deployed on a terminal device, but this manner has a high requirement on computational power of the terminal device. An AI task may also be deployed on an application server, but this also has a high requirement on a bandwidth of a network side. Therefore, a manner of collaboratively deploying an AI task by a terminal device and an application server is proposed. FIG. 1 is a diagram of a scenario to which an embodiment of this application is applicable, or may be considered as a diagram of collaboratively deploying an AI task by a terminal device and an application server. As shown in FIG. 1, an application may be deployed on each of the terminal device and the application server, and the application in each of the terminal device and the application server may run an AI model. The application is configured to provide a corresponding function or service for the terminal device, and may be installed and deployed by a device vendor, an operator, or a third party. The application may be an application, an applet, a sub-application, a web page, or the like pre-installed in the device. The application server may include one or more physical servers, cloud servers, or the like, and the application server may also be referred to as a cloud server, a cloud (cloud), or a cloud platform (cloud platform).

The terminal device may determine an intermediate computation result based on the AI model, and send the intermediate computation result to the application server. The application server obtains a final computation result (for example, an inference result of the AI model) by using the AI model, the intermediate computation result, and the like, and feeds back the final computation result to the terminal device.

The terminal device is a device having a wireless transceiver function, and may further allow a user to access a network. The terminal device has a computing capability, and processes a communication service such as AI and a third-party application service such as AR. The terminal device may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), an uncrewed aerial vehicle, and a robot. For example, the terminal device may be VR glasses. The terminal device may be sometimes referred to as user equipment (user equipment, UE), a terminal, an access station, a UE station, a remote station, a wireless communication device, a user apparatus, or the like.

With reference to a diagram of a scenario shown in FIG. 2, the following describes a data transmission process in the scenario in which the terminal device and the application server collaborate in FIG. 1. In addition to the terminal device and the application server, FIG. 2 further shows an access network and a core network (core network, CN). The terminal device may communicate with the application server sequentially through the access network and the core network. The application server may be located in a DN after a core network user plane function. The application server may exchange data with the core network user plane function through an N6 interface, to provide a computing service. An application function (application function, AF) may be deployed on the application server.

In FIG. 2, an application may be deployed on each of the terminal device and the application server, and an AI task may be implemented through application collaboration. For example, the terminal device performs local rendering by using an AI model. For example, the terminal device renders a foreground, for example, a person who is playing football. The application server performs server-side rendering by using an AI model, and renders a background, for example, a river, a ship, and an egret. The application server may transmit the rendered background to the terminal device through the core network user plane function, the access network, and the like, so that the terminal device can output a final rendering result (for example, including the river, the egret, and the person who is playing football) based on the background and the foreground.

The access network may include one or more access network devices. The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a subsequently evolved base station in 3GPP, an access node in a wireless fidelity (wireless fidelity, Wi-Fi) system, a wireless relay node, a wireless backhaul node, a satellite, an uncrewed aerial vehicle, and the like. The base station may be a macro base station, a micro base station, a pico base station, a small cell, a relay station, or the like. A plurality of base stations may support networks of a same access technology mentioned above, or may support networks of different access technologies mentioned above. The base station may include one or more co-sited or non-co-sited transmission reception points. Alternatively, the access network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the access network device may be a server, a wearable device, a vehicle-mounted device, or the like. For example, an access network device in a vehicle-to-everything (vehicle-to-everything, V2X) technology may be a roadside unit (roadside unit, RSU). An example in which the access network device is a base station is used below for description. A plurality of access network devices in the communication system may be base stations of a same type, or may be base stations of different types. The base station may communicate with the terminal device, or may communicate with the terminal device through a relay station. The terminal device may communicate with a plurality of base stations in different access technologies.

In a possible architecture of the access network device, the access network device includes a central unit (central unit, CU) and/or a distributed unit (distributed unit, DU). The CU and the DU may be understood as division of the access network device from a perspective of logical functions. The CU and the DU may be physically separated, or may be deployed together. This is not specifically limited in embodiments of this application. One CU may be connected to one DU, or a plurality of DUs may share one CU. The CU and the DU may be divided based on a protocol stack. In a possible manner, RRC, a service data adaptation protocol (service data adaptation protocol, SDAP) stack, and a packet data convergence protocol (packet data convergence protocol, PDCP) layer are deployed in the CU, and a radio link control (radio link control, RLC) layer, a media access control (media access control, MAC) layer, and a physical layer are deployed in the DU. In embodiments of this application, the CU and the DU are not completely limited to being divided in the foregoing protocol stack manner. There may be another division manner, for example, division based on a service type.

Alternatively, the access network device may be a central unit control plane (CU-CP) node or a central unit user plane (CU-UP) node, or include a CU-CP and a CU-UP. The CU-CP is responsible for a control plane function, and mainly includes RRC and a PDCP-C. The PDCP-C is mainly responsible for data encryption and decryption, integrity protection, data transmission, and the like on a control plane. The CU-UP is responsible for a user plane function, and mainly includes an SDAP and a PDCP-U. The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane.

In different systems, the CU (including the CU-CP or the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network is configured to implement at least one of functions such as mobility management, data processing, session management, and policy and charging. Names of devices that implement core network functions in systems of different access technologies may be different. This is not limited in embodiments this application. The core network may also include one or more access network devices, for example, may include a session management function (session management function, SMF), a policy control function (policy control function, PCF), and a UPF.

Most AI tasks belong to services with heavy burst traffic, and different AI task division modes or service traffic modes have different requirements on a network transmission rate and a transmission delay. Therefore, when a task division mode, a service traffic mode, or the like between the application server and the terminal device changes, the access network may reconfigure a corresponding RRC parameter for the terminal device, so that the terminal device can adapt to a requirement of a corresponding AI service.

It should be understood that, in embodiments of this application, a device configured to implement a function of a specific device may be a device, or may be a software module or a hardware module (such as a chip) that can support the device in implementing the function. For example, a device configured to implement a function of a terminal device may be a terminal device, or may be a software module or a hardware module (such as a chip) that can support the terminal device in implementing the function. In the technical solutions provided in embodiments of this application, an example in which an apparatus configured to implement a function of a terminal device is a terminal device is used to describe the technical solutions provided in embodiments of this application. A device configured to implement a function of an access network device may be an access network device, or may be a software module or a hardware module (such as a chip) that can support the access network device in implementing the function. In the technical solutions provided in embodiments of this application, an example in which an apparatus configured to implement a function of a network is an access network device is used to describe the technical solutions provided in embodiments of this application.

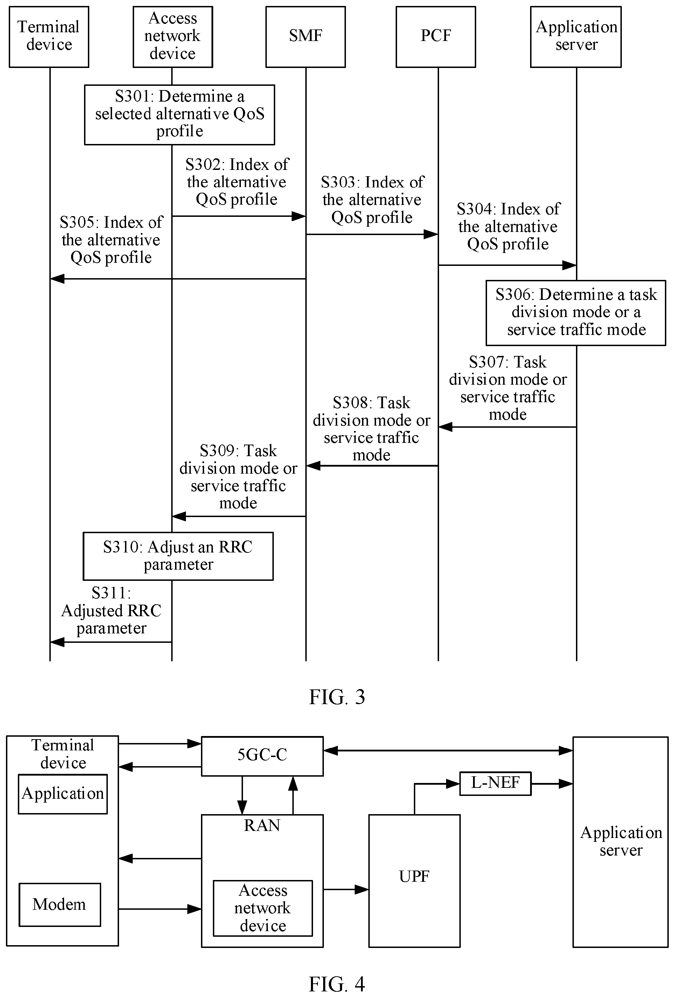

With reference to the scenario shown in FIG. 2, the following describes a manner of adjusting an RRC parameter in the background. FIG. 3 is a schematic flowchart of adjusting an RRC parameter in the background. FIG. 3 shows steps S301 to S311, which are separately described below.

S301: An access network device determines a selected alternative QoS profile.

When a communication indicator in a normal QoS profile of a QoS flow cannot be met, the access network device may select one alternative QoS profile from one or more alternative QoS profiles, so that the selected alternative QoS profile can be subsequently used to serve the corresponding QoS flow.

The access network device may perform matching on the one or more alternative QoS profiles one by one in descending order of priorities of the one or more alternative QoS profiles. If the access network device determines that an alternative QoS profile can meet a specified communication indicator requirement such as a GFBR, a PDB, or a PER, the access network device determines to use the alternative QoS profile to serve the corresponding QoS flow.

S302: The access network device sends an index of the alternative QoS profile to an SMF. Correspondingly, the SMF receives the index of the alternative QoS profile from the access network device. Optionally, the access network device may include the index of the QoS profile in a notification control message, and the access network device sends the notification control message to the SMF, which is equivalent to sending the index of the alternative QoS profile to the SMF.

S303: The SMF sends the index of the alternative QoS profile to a PCF. Correspondingly, the PCF receives the index of the alternative QoS profile from the SMF.

S304: The PCF sends the index of the alternative QoS profile to an application server. Correspondingly, the application server receives the index of the alternative QoS profile from the PCF.

For example, the PCF may send the index of the alternative QoS profile to an AF deployed on the application server.

S305: The SMF sends the index of the alternative QoS profile to a terminal device. Correspondingly, the terminal device receives the index of the alternative QoS profile from the SMF. In this way, the terminal device can perceive that a QoS profile that needs to be used is modified (or changes or updates) from a normal QoS profile to the alternative QoS profile indicated by the index of the alternative QoS profile, and correspondingly can perceive a change in a QoS parameter that needs to be used, or the like.

S306: The application server determines a task division mode or a service traffic mode.

S307: The application server sends the task division mode or the service traffic mode to the PCF. Correspondingly, the PCF receives the task division mode or the service traffic mode from the application server.

S308: The PCF sends the task division mode or the service traffic mode to the SMF. Correspondingly, the SMF receives the task division mode or the service traffic mode from the PCF.

S309: The SMF sends the task division mode or the service traffic mode to the access network device. Correspondingly, the access network device receives the task division mode or the service traffic mode from the SMF.

S310: The access network device adjusts an RRC parameter.

Because the task division mode or the service traffic mode changes, the access network device may adjust the RRC parameter.

S311: The access network device sends an adjusted RRC parameter to the terminal device. Correspondingly, the terminal device receives the adjusted RRC parameter from the access network device.

When the access network device can subsequently meet a communication indicator such as a GFBR, a PDB, or a PER in the normal QoS profile of the QoS flow, the access network device may further resume using the normal QoS profile to serve the QoS flow. In addition, the access network device may further notify the SMF of the recovery information, and the SMF notifies the AF and/or the UE level by level. The recovery information indicates the normal QoS profile, or indicates that the normal QoS profile is resumed to serve the QoS flow.

It can be learned from FIG. 3 that the access network device needs to notify the application server of the selected alternative QoS profile, and determines the adjusted RRC parameter only after receiving the task division mode or the service traffic mode from the application server, that is, triggers RRC parameter adjustment late. In addition, a path for transmitting the alternative QoS profile by the access network device to the application server (a specific path includes: access network device→SMF→PCF→application server) and a path for receiving the task division mode or the service traffic mode from the application server (a specific path includes: application server→PCF→SMF→access network device) are long, making the access network device adjust the RRC parameter later. It can be learned that RRC parameter adjustment timeliness needs to be improved currently. "A→B" means from A to B.

In view of this, embodiments of this application provide a communication method. In the method, after an access network device determines selected alternative QoS configuration information, the access network device may notify a terminal device of the selected alternative QoS configuration information, and the terminal device may directly determine an adjusted RRC parameter (for example, a first RRC parameter) based on the selected alternative QoS configuration information and a first association relationship, where the first association relationship indicates an association relationship between alternative QoS configuration information and an RRC parameter. In this way, RRC parameter adjustment is triggered earlier, and the terminal device may directly determine the RRC parameter based on the selected alternative QoS configuration information, thereby simplifying a procedure of triggering RRC parameter adjustment, and helping the terminal device perform RRC adjustment earlier. In conclusion, the method can improve RRC parameter adjustment timeliness.

The communication method provided in embodiments of this application may be applied to the scenario shown in FIG. 1 or FIG. 2. In addition, the method provided in embodiments of this application may be further applied to another possible scenario. The following provides descriptions with reference to the accompanying drawings.

FIG. 4 is a diagram of still another scenario to which an embodiment of this application is applicable. Alternatively, FIG. 4 may be considered as a diagram of an architecture of a communication system, for example, a diagram of an architecture of a 5G communication system. As shown in FIG. 4, the scenario includes a terminal device, a core network, an access network, and an application server. Different from FIG. 2, FIG. 4 further shows a 5G core network (5GC) control plane (control plane) (which may be referred to as a 5GC-C/5GC-CP for short) and a 5G core network user plane (user plane) (which may be referred to as a 5GC-U/5GC-UP for short) included in the core network. The 5GC-C may include, for example, a local (local) network exposure function (network exposure function, NEF) (which may be referred to as an L-NEF for short), an SMF, and a PCF. The 5GC-U may include, for example, a UPF. An application is deployed on the terminal device, and the terminal device further includes a modem (modem), configured to perform signal modulation and demodulation.

As shown in FIG. 4, the terminal device may communicate with the 5GC-C, for example, may request the 5GC-C to establish a session for the terminal device. The 5GC-C may further communicate with the RAN. Air interface communication may be performed between the RAN and the terminal device. The RAN may communicate with the application server sequentially through the UPF, the L-NEF, and the like. The RAN may communicate with the UPF through an NG3 interface.

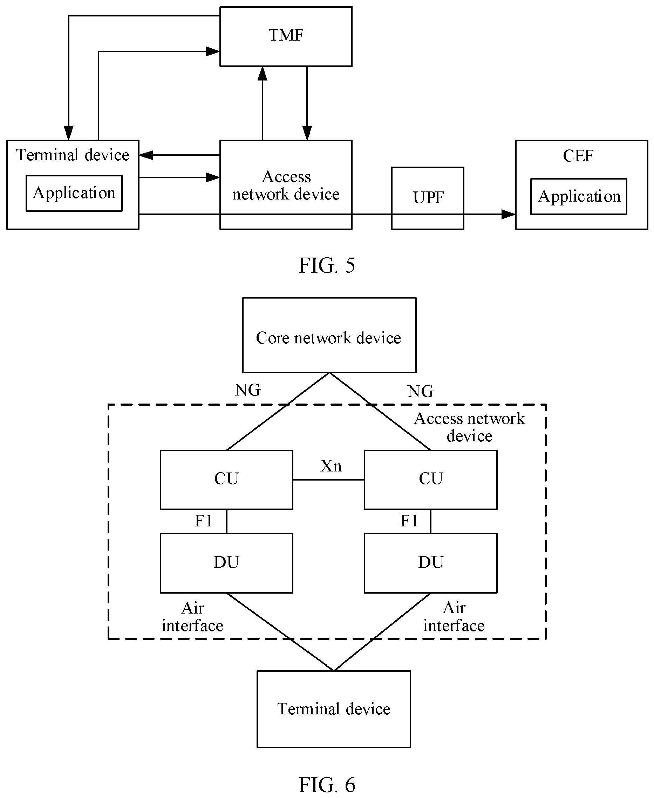

FIG. 5 is a diagram of yet another scenario according to an embodiment of this application. Alternatively, FIG. 5 may be considered as a diagram of an architecture of a communication system. The scenario shows a terminal device, an access network device, a task management function (task management function, TMF), a computing execution entity (computing execution entity, CEF), a UPF, and the like. Different from FIG. 4, FIG. 5 further shows the TMF and the CEF.

The TMF may be deployed in an access network, for example, is deployed relatively independently of the access network device, or is embedded in the access network device, or is embedded in a software module (for example, a CU or a DU) of the access network device, or is embedded in a hardware module of the access network device; or may be deployed in a core network (for example, may serve as a function network element of the core network). The TMF is responsible for accepting a computing service request and scheduling a compute task. The CEF may be deployed in an application server in a data network, a mobile edge computing (mobile edge computing, MEC) platform, the UPF, or the access network device.

As shown in FIG. 5, the terminal device may separately communicate with the TMF and the access network device, and the terminal device and the access network device may communicate with each other. The access network device may also communicate with the CEF through the UPF or the like. An application may be deployed on each of the terminal device and the CEF.

FIG. 6 is a diagram of a structure of a communication system to which an embodiment of this application is applicable. FIG. 6 shows a core network device, a terminal device, and an access network device. In FIG. 6, the terminal device is, for example, the terminal device in FIG. 1, FIG. 2, FIG. 4, or FIG. 5, the access network device is, for example, the access network device in FIG. 2, FIG. 4, or FIG. 5, and the core network device is, for example, the core network device shown in FIG. 2 or FIG. 4. FIG. 6 further shows a structure of the access network device. Devices in the communication system are connected through an interface (for example, NG or Xn) or an air interface.

The access network device may serve as an independent RAN node, or may include a plurality of RAN nodes, for example, include a CU and a DU. The CU and the DU may communicate with each other through an F1 interface. Optionally, the CU may be further split into a CU-CP and a CU-UP. At least one of the access network device, the core network device, the CU in the access network device, the DU in the access network device, the CU-CP in the access network device, or the CU-UP in the access network device in FIG. 2 may be considered as an example of the network device in FIG. 1.

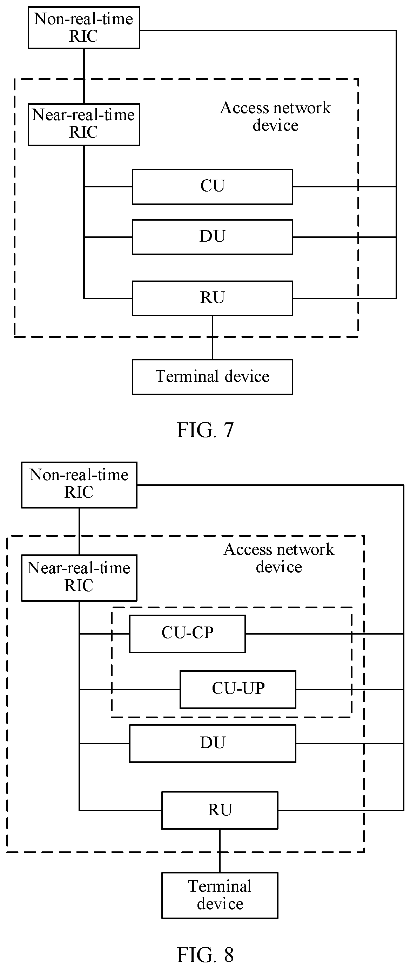

FIG. 7 is a diagram of a structure of a communication system to which an embodiment of this application is applicable. As shown in FIG. 7, the communication system includes a RAN intelligent controller (RAN intelligent controller, RIC), a terminal device, a core network device, and an access network device. In FIG. 7, the terminal device is, for example, the terminal device in FIG. 1, FIG. 2, FIG. 4, FIG. 5, or FIG. 6, the access network device is, for example, the access network device in FIG. 2, FIG. 4, FIG. 5, or FIG. 6, and the core network device is, for example, the core network device shown in FIG. 2, FIG. 4, or FIG. 6. The access network device in FIG. 7 may be considered as an access network device in an O-RAN architecture. The RIC includes a near-real-time RIC (near-real-time RIC, nrt-RIC) and a non-real-time RIC (non-real-time RIC, Non-RT RIC). The non-real-time RIC mainly processes non-real-time information, for example, delay-insensitive data, and a delay of the data may be at a second level. The real-time RIC mainly processes near-real-time information, for example, delay-sensitive data, and a delay of the data is at a level of tens of milliseconds. Optionally, the near-real-time RIC and the non-real-time RIC each may alternatively be independently deployed as a network element.

The near-real-time RIC may obtain network-side and/or terminal device information from the access network device (for example, at least one of a CU, a DU, and an RU) and/or the terminal device. The access network device in FIG. 7 is, for example, the access network device in FIG. 2, FIG. 4, FIG. 5, or FIG. 6.

Optionally, the near-real-time RIC may process the information, and send a processing result to the RAN node and/or the terminal device. The nrt-RIC may communicate with the DU through an E2 interface. Optionally, the processing result may be exchanged between the CU and the DU and/or between the DU and the RU. For example, the near-real-time RIC delivers the processing result to the DU, and the DU sends the processing result to the RU.

The non-real-time RIC may obtain network-side and/or terminal-side information from the radio access device (for example, at least one of the CU, the DU, and the RU) and/or the terminal device. Optionally, the non-real-time RIC may also process the information, and send a processing result to the RAN node and/or the terminal device. Optionally, the processing result may be exchanged between the CU and the DU and/or between the DU and the RU. For example, the non-real-time RIC delivers the processing result to the DU, and the DU sends the processing result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the access network device (for example, the CU or the DU), and the non-real-time RIC is deployed on an OAM, a cloud server, the core network device, or another network device.

FIG. 8 is a diagram of a structure of a communication system to which an embodiment of this application is applicable. An access network device in FIG. 8 may be considered as another access network device in an O-RAN architecture. Compared with FIG. 7, FIG. 8 shows that a CU is separated into a CU-CP and a CU-UP. For related content of a terminal device and a core network device shown in FIG. 8, refer to the content of the terminal device and the core network device in FIG. 7 respectively. Repeated content is not described again. In FIG. 8, the terminal device is, for example, the terminal device in FIG. 1, FIG. 2, FIG. 4, FIG. 5, FIG. 6, or FIG. 7, the access network device is, for example, the access network device in FIG. 2, FIG. 4, FIG. 5, FIG. 6, or FIG. 7, and the core network device is, for example, the core network device shown in FIG. 2, FIG. 4, FIG. 6, or FIG. 7.

The following describes the method provided in embodiments of this application with reference to the accompanying drawings. In the accompanying drawings corresponding to embodiments of this application, all steps represented by dashed lines are optional steps. In embodiments of this application, the terminal device may be, for example, the terminal device in any one of FIG. 1, FIG. 2, FIG. 4, and FIG. 5 to FIG. 8, the access network device may be, for example, the access network device in any one of FIG. 2 and FIG. 4 to FIG. 8, the core network device is, for example, the core network device in any one of FIG. 2, FIG. 4, and FIG. 6 to FIG. 8, the application server may be, for example, the application server in FIG. 1, FIG. 2, or FIG. 4 or the CEF in FIG. 5, and the TMF is, for example, the TMF in FIG. 5. If the technical solutions provided in embodiments of this application are applied to another communication system, a name, a function, and/or the like of a device may change. This is not limited.

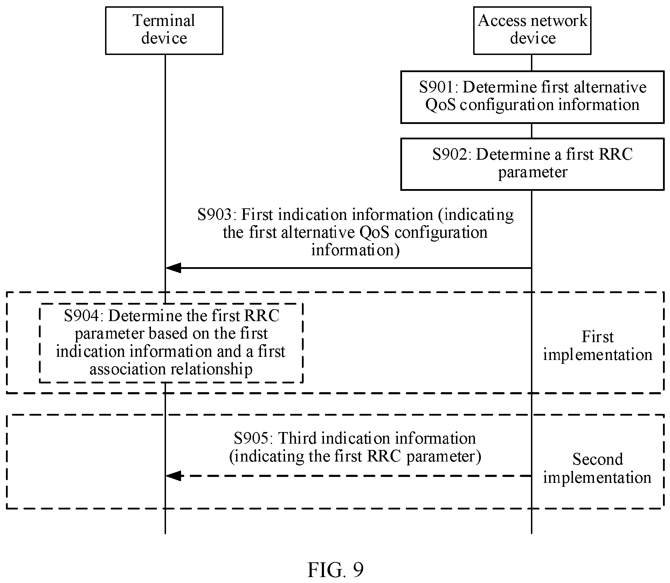

FIG. 9 is a diagram of a communication method according to an embodiment of this application. FIG. 9 shows steps S901 and S905, which are separately described below.

S901: An access network device determines first alternative QoS configuration information.

The first alternative QoS configuration information may be determined by the access network device, for example, determined by a hardware module or a software module of the access network device, specifically, for example, determined by a CU of the access network device, a DU of the access network device, a CU-CP of the access network device, or an nrt-RIC. This is not limited. The first alternative QoS configuration information indicates one or more communication indicators that a first QoS flow needs to meet. The first alternative QoS configuration information may include, for example, an alternative QoS profile of the first QoS flow. For content of the alternative QoS profile of the first QoS flow, refer to the foregoing content. In addition to the alternative QoS profile of the first QoS flow, optionally, the first alternative QoS configuration information further includes at least one of an alternative QoS parameter, an input data rate, and an output data rate corresponding to each of a plurality of subtasks corresponding to a first service. The first service is a service corresponding to the first QoS flow, for example, an AI service.

The first alternative QoS configuration information may be one piece of alternative QoS configuration information in at least one piece of alternative QoS configuration information of the first QoS flow. The at least one piece of alternative QoS configuration information of the first QoS flow may be preconfigured in the access network device, or may be indicated by a core network device to the access network device, for example, may be indicated by a core network device corresponding to a control plane in a core network to the access network device.

For example, before the first QoS flow is transmitted, a terminal device and the access network device may preconfigure or predefine one piece of QoS configuration information (which may be referred to as, for example, initial QoS configuration information or normal QoS configuration information). For example, the normal QoS configuration information may be preconfigured or predefined in the terminal device and the access network device by using a protocol, or the normal QoS configuration information may be determined by the access network device and the terminal device through negotiation. This is not limited. When one or more communication indicators corresponding to the normal QoS configuration information cannot be met, the access network device may select the first alternative QoS configuration information from the at least one piece of alternative QoS configuration information. The access network device determines the first alternative QoS configuration information in a plurality of manners, which are separately described below.

Manner 1: The access network device determines the first alternative QoS configuration information based on network status information.

For example, the access network device may perceive the network status information. For content of the network status information, refer to the foregoing content. Details are not described herein again.

After determining the network status information, the access network device may determine, as the first alternative QoS configuration information, alternative QoS configuration information that can match the network status information in the at least one piece of alternative QoS configuration information. In other words, the first alternative QoS configuration information can match the network status information.

That the first alternative QoS configuration information can match the network status information may be understood as that the network status information can reach or meet the first alternative QoS configuration information, specifically, for example, some or all communication indicators in one or more communication indicators corresponding to the network status information can meet some or all indicators in one or more communication indicators indicated by the alternative QoS configuration information.

For example, the one or more communication indicators indicated by the network status information include a GFBR, a PDB, and a PER, and the one or more communication indicators indicated by the first alternative QoS configuration information include a GFBR, a PDB, and a PER. That the first alternative QoS configuration information can match the network status information may be that the GFBR indicated by the network status information can be greater than or equal to the GFBR indicated by the first alternative QoS configuration information, the PDB indicated by the network status information can be less than or equal to the PDB indicated by the first alternative QoS configuration information, and the PER indicated by the network status information can be less than or equal to the PER indicated by the first alternative QoS configuration information.

Optionally, the access network device may sequentially perform matching on the at least one piece of alternative QoS configuration information in descending order of priorities of the alternative QoS configuration information, and use, as the first alternative QoS configuration information, alternative QoS configuration information that is first determined and that can match the network status information. The priorities of the at least one piece of alternative QoS configuration information may be preconfigured or predefined in the access network device, for example, may be preconfigured in the access network device by using a protocol; or the priorities of the at least one piece of alternative QoS configuration information may be obtained from the core network (for example, the core network device, specifically, for example, an SMF).

For example, the at least one piece of alternative QoS configuration information includes alternative QoS configuration information 1, alternative QoS configuration information 2, and alternative QoS configuration information 3, a priority of the alternative QoS configuration information 2 is higher than a priority of the alternative QoS configuration information 3, and the priority of the alternative QoS configuration information 3 is higher than a priority of the alternative QoS configuration information 1. The alternative QoS configuration information 1 indicates that a network packet error rate is 0.5%, the alternative QoS configuration information 2 indicates that a network packet error rate is 0.3%, and a packet error rate of the alternative QoS configuration information 3 is 0.6%. The access network device determines that a current network packet error rate indicated by the network status information is 0.45%. If the access network device first determines that the alternative QoS configuration information 2 cannot match the network status information, and then determines that the packet error rate of the alternative QoS configuration information 3 can match the network status information, the access network device determines the alternative QoS configuration information 3 as the first alternative QoS configuration information.

Manner 2: The access network device determines the first alternative QoS configuration information based on network status information and assistance information of the terminal device.

For example, the access network device may obtain the assistance information of the terminal device from the terminal device. The assistance information of the terminal device indicates resource usage of the terminal device (which may be specifically, for example, resource utilization of the terminal device). For example, the assistance information of the terminal device may include overheating (overheating) information of the terminal device, and the overheating information may indicate that the terminal device is overheated or not overheated. For example, the assistance information of the terminal device may further include computing load status information of the terminal device or power of the terminal device, and the computing load status information may indicate that a processor of the terminal device is in a light-load (or resource-idle) or heavy-load (resource-busy) state. For example, if load of the processor of the terminal device is less than first load, the terminal device determines that the processor of the terminal device is in a light-load state; or if load of the processor of the terminal device is greater than a second load, the terminal device determines that the processor of the terminal device is in a heavy-load state. The first load is less than the second load, and the first load and the second load may be preconfigured or predefined in the terminal device, or may be configured by the access network device for the terminal device.

In this case, the access network device may determine, as the first alternative QoS configuration information, alternative QoS configuration information that can match the network status information and that can meet the assistance information of the terminal device in the at least one piece of alternative QoS configuration information. In other words, the first alternative QoS configuration information can match the network status information and the assistance information of the terminal device.

That the first alternative QoS configuration information can match the assistance information of the terminal device may mean that the resource usage of the terminal device can be optimized in the first alternative QoS configuration information. For example, when the resource utilization of the terminal device is less than or equal to first resource utilization, the first alternative QoS configuration information may increase the resource utilization of the terminal device to some extent; or when the resource utilization of the terminal device is greater than second resource utilization, the first alternative QoS configuration information may decrease the resource utilization of the terminal device to some extent. The first resource utilization is less than the second resource utilization, and the first resource utilization and the second resource utilization may be preconfigured or predefined in the access network device.

The access network device may adjust alternative QoS configuration information based on a network status and an assistance information power (or power consumption) status of the terminal device, so that a best QoS parameter set that a network currently can meet in the alternative QoS configuration information can be provided for a QoS flow, to avoid affecting service experience as much as possible.

Manner 3: The access network device determines the first alternative QoS configuration information based on network status information and first traffic-associated information.

The first traffic-associated information may be received by the access network device from the terminal device, and/or may be received from an application server. A manner in which the access network device receives the first traffic-associated information is not specifically limited. The first traffic-associated information may be carried in data of the first quality of service flow, so that transmission burden in a network can be relatively reduced.

The first traffic-associated information includes experienced (experienced) QoS (flow) information and/or service feature information. The experienced QoS information indicates an actual transmission parameter of the first QoS flow in a historical time period. The historical time period may be from a moment at which the first QoS flow starts to be received to a current moment, or may be from a moment at which the first QoS flow starts to be generated to a current moment, or may be any of a time period from a moment at which the first QoS flow starts to be generated to a current moment. This is not limited in this embodiment of this application. The actual transmission parameter may be, for example, a transmission delay (or duration) experienced by the data of the first QoS flow (which may also be referred to as an experienced transmission delay (experienced delay)), and/or an average data transmission rate experienced by the data of the first QoS flow. The transmission delay experienced by the data of the first QoS flow may be a sum of transmission delays experienced by one or more pieces of data of the first QoS flow. The transmission delay experienced by the data may be, for example, a delay experienced from data generation to data transmission. The transmission delay experienced by the data is specifically, for example, a transmission delay of the data sent from the terminal device to the application server, or a transmission delay of the data sent from the application server to the terminal device. The average data transmission rate experienced by the data of the first QoS flow may also be an average data transmission rate of the one or more pieces of data of the first QoS flow. The service feature information indicates an attribute of the first service corresponding to the first QoS flow, for example, may include an importance degree (or referred to as a priority) of the first service and/or an importance degree of the data of the first QoS flow.

For example, the first traffic-associated information includes the transmission delay experienced from generation of the data of the first quality of service flow to the current moment. If the access network device detects that the transmission delay experienced by the data of the first QoS flow is greater than a first threshold, and the network status information indicates a good network status, the access network device may select, as the first alternative QoS configuration information, alternative QoS configuration information with a small PDB that the current network status can meet. The network status indicated by the network status information indicates an air interface transmission status, and the air interface transmission status is, for example, a status of communication between the terminal device and the access network device. The first threshold may be preconfigured or predefined in the access network device. In this way, it is ensured that a final end-to-end delay of the data of the first QoS flow can be less than a specific threshold. Alternatively, if the access network device detects that the transmission delay experienced by the data of the first QoS flow is less than a second threshold, and the network status information indicates a poor network status, the access network device may select, as the first alternative QoS configuration information, alternative QoS configuration information with a large PDB that the current network status can meet. The second threshold may be preconfigured or predefined in the access network device. The second threshold is less than or equal to the first threshold. In this way, network resources occupied by the data of the first QoS flow are reduced while it is ensured that an end-to-end delay of the data packet is met.

For example, Table 1 is a correspondence between the first traffic-associated information and alternative QoS configuration information provided in this embodiment of this application.

**Table 1**

| Transmission delay (millisecond (ms)) experienced by the data of the first QoS flow | Index of alternative QoS configuration information |
|---|---|
| ≤5 ms | 1 (PDB=20 ms) |
| >15 ms | 2 (PDB=10 ms) |

Table 1 is described by using an example in which the first threshold is 15 ms and the second threshold is 5 ms. As shown in Table 1, when the transmission delay experienced by the data of the first QoS flow is less than or equal to 5 ms, the access network device may select an alternative QoS configuration with a PDB of 20 ms; or when the transmission delay experienced by the data of the first QoS flow is greater than 15 ms, the access network device may select an alternative QoS configuration with a PDB of 10 ms. In this way, network resources occupied by the data are reduced as much as possible while it is ensured that the transmission delay of the data meets a requirement.

For example, the first traffic-associated information includes a priority of the data of the first QoS flow. When the priority of the data of the first QoS flow is high and a network status is good, the access network device selects alternative QoS with a small PDB or a large GBR as the first alternative QoS configuration information. In this way, it is ensured that the data of the first QoS flow can obtain more transmission resources and can be preferential, and a success rate of transmitting the data of the first QoS flow is increased. Alternatively, when the priority of the data of the first QoS flow is low and a network status is poor, the access network device selects alternative QoS with a large PDB or a small GBR as the first alternative QoS configuration information.

For example, Table 2 is a correspondence between the first traffic-associated information and alternative QoS configuration information provided in this embodiment of this application.

**Table 2**

| Importance degree of data | Index of alternative QoS configuration information |
|---|---|
| Low (low) | 1 (GBR=4 Mbit/s (Mbps)) |
| Medium (medium) | 2 (GBR=12 Mbps) |
| High (high) | 3 (GBR=20 Mbps) |

As shown in Table 2, when it is detected that the importance degree of the data of the first QoS flow is high, the access network device may select alternative QoS configuration information with a GBR of 20 Mbps as the first alternative QoS configuration information; or when it is detected that the importance degree of the data of the first QoS flow is medium, the access network device may select alternative QoS configuration information with a GBR of 12 Mbps as the first alternative QoS configuration information; or when it is detected that the importance degree of the data of the first QoS flow is low, the access network device may select alternative QoS configuration information with a GBR of 4 Mbps as the first alternative QoS configuration information.

In a possible implementation, the access network device may pre-store a third association relationship, or the access network device may receive fourth indication information from another device (for example, a TMF or a core network device) other than the access network device in the network. The fourth indication information indicates the third association relationship. The access network device may determine the first alternative QoS configuration information based on the first traffic-associated information and the third association relationship. The third association relationship includes an association relationship between at least one piece of alternative QoS configuration information and at least one piece of traffic-associated information. The at least one piece of alternative QoS configuration information includes the first alternative QoS configuration information. The at least one piece of traffic-associated information includes the first traffic-associated information. In this way, after obtaining the first traffic-associated information, the access network device may determine, as the first alternative QoS configuration information, alternative QoS configuration information that matches the first traffic-associated information in the third association relationship.

Optionally, the third association relationship may be preconfigured or predefined in the access network device, or may be obtained by the access network device from the TMF. This is not limited in this embodiment of this application.

S902: The access network device determines a first RRC parameter.

Because the QoS configuration information changes, the access network device may re-determine the first RRC parameter. For content of the first RRC parameter, refer to the foregoing content of the RRC parameter. The access network device may determine, based on the first alternative QoS configuration information, the first RRC parameter that matches the first alternative QoS configuration information.

For example, a first association relationship may be preconfigured or predefined for the access network device, and the first association relationship indicates an association relationship between one or more pieces of alternative QoS configuration information and one or more RRC parameters. In this way, the access network device may determine, as the first RRC parameter, an RRC parameter that matches the first alternative QoS configuration information in the first association relationship. Certainly, the one or more pieces of alternative QoS configuration information include the first alternative QoS configuration information, and the one or more RRC parameters include the first RRC parameter. The one or more pieces of alternative QoS configuration information may be alternative QoS configuration information corresponding to the first QoS flow, or may be alternative QoS configuration information of a plurality of QoS flows, where the plurality of QoS flows include the first QoS flow. It should be understood that alternative QoS configuration information corresponding to one QoS flow in the plurality of QoS flows and alternative QoS configuration information corresponding to another QoS flow in the plurality of QoS flows may be completely the same or partially the same, or may be completely different. This is not specifically limited.

It should be understood that the one or more pieces of alternative QoS configuration information may be in one-to-one correspondence with the one or more RRC parameters in the first association relationship. For example, each piece of alternative QoS configuration information in the one or more pieces of alternative QoS configuration information is associated with one RRC parameter in the one or more RRC parameters in the first association relationship. Alternatively, the one or more pieces of alternative QoS configuration information may be in many-to-one correspondence with the one or more RRC parameters in the first association relationship. For example, a plurality of pieces of alternative QoS configuration information in the one or more pieces of alternative QoS configuration information are associated with one RRC parameter in the one or more RRC parameters in the first association relationship.

The following describes specific content of the first association relationship with reference to A1 to A3.

A1: The first association relationship includes an association relationship between the one or more pieces of alternative QoS configuration information and the one or more RRC parameters. Table 3 is an example of the first association relationship. Table 3 is described by using an example in which alternative QoS configuration information includes a GBR and an RRC parameter includes a CG period.

**Table 3**

| Alternative QoS configuration information (including a GBR) | RRC parameter (including a CG period) |
|---|---|
| GBR=4 Mbps | 11.1 ms |
| GBR=12 Mbps | 33.3 ms |

As shown in Table 3, if the first alternative QoS configuration information indicates that a GBR is 4 Mbps, the access network device may determine the first RRC parameter based on the first association relationship shown in Table 3, and a CG period in the first RRC parameter is 11.1 ms.

A2: The first association relationship includes an association relationship between identifiers of the one or more pieces of alternative QoS configuration information and the one or more RRC parameters.

An identifier of one piece of alternative QoS configuration information in the identifiers of the one or more pieces of alternative QoS configuration information may be at least one of an identifier/index of a QoS flow corresponding to the one piece of alternative QoS configuration information, an index/identifier of the one piece of alternative QoS configuration information, or an identifier/index of at least one communication indicator in one or more communication indicators indicated by the one piece of alternative QoS configuration information. The identifier of the QoS flow may be a combination of at least one of a data radio bearer identifier (data radio bearer identifier, DRB ID), a logical channel identifier (logical channel identifier, LCID), a protocol data unit (protocol data unit, PDU) session (session) ID, or a QoS flow ID mapped to an air interface on which the QoS flow is located. The identifier/index of the at least one communication indicator may be represented by a value identifier, a number, a sequence number, or the like of the at least one communication indicator. This is not limited.

Table 4 is an example of the first association relationship. Table 4 is described by using an example in which alternative QoS configuration information includes an alternative QoS index and an RRC parameter includes a number of CG resources.

**Table 4**

| Index of alternative QoS configuration information | RRC parameter (including a frequency domain resource) |
|---|---|
| 1 (GBR=4 Mbps) | CG resources: 5 RBs |
| 2 (GBR=12 Mbps) | CG resources: 10 RBs |
| 3 (GBR=20 Mbps) | CG resources: 15 RBs |

As shown in Table 4, a number of CG resources included in an RRC parameter corresponding to alternative QoS configuration information 1 is 5 RBs, a number of CG resources included in an RRC parameter corresponding to alternative QoS configuration information 2 is 10 RBs, and a number of CG resources included in an RRC parameter corresponding to alternative QoS configuration information 3 is 15 RBs.

Table 5 is an example of the first association relationship. Table 5 is described by using an example in which alternative QoS configuration information includes an alternative QoS index and an RRC parameter includes a CG period.

**Table 5**

| Index of alternative QoS configuration information | RRC parameter (including a CG period) |
|---|---|
| 1 (GBR=4 Mbps) | CG period: 33.3 ms |
| 2 (GBR=12 Mbps) | CG period: 16.6 ms |
| 3 (GBR=20 Mbps) | CG period: 11.1 ms |

As shown in Table 5, alternative QoS configuration information 1 includes a GBR of 4 Mbps, and a CG period included in an RRC parameter corresponding to the alternative QoS configuration information 1 is 33.3 ms; alternative QoS configuration information 2 includes a GBR of 12 Mbps, and a CG period included in an RRC parameter corresponding to the alternative QoS configuration information 2 is 16.6 ms; and alternative QoS configuration information 3 includes a GBR of 20 Mbps, and a CG period included in an RRC parameter corresponding to the alternative QoS configuration information 3 is 11.1 ms.

A3: The first association relationship includes an association relationship between identifiers of the one or more pieces of alternative QoS configuration information and identifiers (or indexes) of the one or more RRC parameters.

Table 6 is an example of the first association relationship.

**Table 6**

| QoS flow ID | Index of alternative QoS configuration information | Identifier or index of an RRC parameter |
|---|---|---|
| 1 | 1 | SPS1, CG1, or DRX1 |
| | 2 | SPS2, CG2, or DRX2 |
| | 3 | SPS3, CG3, or DRX3 |
| 2 | 4 | SPS4, CG4, or DRX4 |
| | 5 | |
| 3 | 6 | SPS5, CG5, or DRX5 |
| 4 | 7 | SPS6, CG6, or DRX6 |

As shown in Table 6, there is a one-to-one correspondence between alternative QoS configuration information supported by a QoS flow 1, a QoS flow 3, and a QoS flow 4 and an identifier of an RRC parameter, and there is a many-to-one mapping relationship between an index of alternative QoS configuration information supported by a QoS flow 2 and an identifier of an RRC parameter. The QoS flow 1, the QoS flow 2, the QoS flow 3, and the QoS flow 4 may be respectively mapped to different identifiers of RRC parameters.

As shown in Table 6, the QoS flow 1 corresponds to QoS configuration information 1, QoS configuration information 2, and QoS configuration information 3, the QoS configuration information 1 corresponds to an RRC parameter SPS1, CG1, or DRX1, the QoS configuration information 2 corresponds to an RRC parameter SPS2, CG2, or DRX2, and the QoS configuration information 3 corresponds to an RRC parameter SPS3, CG3, or DRX3; the QoS flow 2 corresponds to QoS configuration information 4 and QoS configuration information 5, and the QoS configuration information 4 and the QoS configuration information 5 correspond to an RRC parameter SPS4, CG4, or DRX4; the QoS flow 3 corresponds to QoS configuration information 6, and the QoS configuration information 6 corresponds to an RRC parameter SPS5, CG5, or DRX5; and the QoS flow 4 corresponds to QoS configuration information 7, and the QoS configuration information 7 corresponds to an RRC parameter SPS6, CG6, or DRX6.

After determining the first RRC parameter, the access network device may activate the first RRC parameter. For example, the access network device may activate a corresponding CG configuration based on a mapping relationship between a GBR and a number of CG resources/period corresponding to the first alternative QoS configuration information. For example, as shown in Table 5, the access network device determines that the CG period is switched to 16.6 ms.

S903: The access network device sends first indication information to the terminal device. Correspondingly, the terminal device receives the first indication information from the access network device. The first indication information indicates the first alternative QoS configuration information.

For example, the first indication information may include an identifier of the first alternative QoS configuration information. For content of the identifier of the first alternative QoS configuration information, refer to the foregoing content of the identifier of the alternative QoS configuration information. That the access network device sends the identifier of the first alternative QoS configuration information to the terminal device is equivalent to indicating the first alternative QoS configuration information. For example, the identifier of the first alternative QoS configuration information may be an identifier of the first QoS flow and/or at least one of an index, a PDB, an uplink GFBR, a downlink GFBR, or a PER of the first QoS configuration information.

For example, when each QoS flow supports only one piece of alternative QoS configuration information, or one or more pieces of alternative QoS configuration information supported by each QoS flow are mapped to only one group of RRC parameters, that is, an association relationship between identifiers/indexes of one or more QoS flows and one or more RRC parameters is a one-to-one relationship, the access network device needs to include only an identifier/index of one QoS flow in the first indication information, so that the terminal device can determine, based on the first association relationship, a group of RRC parameters to be activated by the access network device.

Alternatively, the first indication information may directly include some or all information in the first alternative QoS configuration information.

The access network device may send the first indication information to the terminal device in a plurality of manners. For example, refer to any one of manners shown in B1 to B3 below.

B1: The access network device may directly send the first indication information to the terminal device.

In this implementation, the first indication information may be DCI, a media access control (media access control, MAC) control element (control element, CE), a packet data convergence protocol (packet data convergence protocol, PDCP) control PDU, or an RRC message.

A module for determining the first alternative QoS configuration information and an implementation of the first indication information vary with a structure of the access network device. In this case, a process in which the access network device internally transmits the first indication information may also vary. The following provides an example for description with reference to cases shown in C1 to C4.

C1: If the access network device is a device of a CU/DU separated architecture, a CU of the access network device determines the first alternative QoS configuration information, and the first indication information may be carried in DCI or a MAC CE, the CU may notify a DU of the first indication information through an F1 interface.

C2: If the access network device is a device of a CU/DU separated architecture, a DU of the access network device determines the first alternative QoS configuration information, and the first indication information may be carried in an RRC message or a PDCP control PDU, the DU may notify a CU of the first indication information through an F1 interface.

If the CU of the access network device is further separated into a CU-CP and a CU-UP, the CU-CP determines the first alternative QoS configuration information, and the first indication information may be carried in the PDCP control PDU. In this case, the CU-CP needs to further notify the CU-UP of the indication information.

C3: If the access network device is a device of an O-RAN architecture, an nrt-RIC determines the first alternative QoS configuration information, and the first indication information may be carried in DCI or a MAC CE, the nrt-RIC may notify a DU of the first indication information through an E2 interface.

C4: If the access network device is a device of an O-RAN architecture, an nrt-RIC determines the first alternative QoS configuration information, and the first indication information may be carried in an RRC message or a PDCP control PDU, the nrt-RIC may notify a CU of the first indication information. If the CU is further separated into a CU-CP and a CU-UP, the nrt-RIC may separately notify the CU-CP and the CU-UP of the first indication information, and then the CU-CP and the CU-UP separately includes the first indication information in the RRC message or the PDCP control PDU.

B2: The access network device may send the first indication information to the terminal device through a 5GC control plane.

For example, the access network device may include the first indication information in a PDU session resource notify (resource notify) message. For example, a current QoS parameters set index information element (current QoS parameters set index IE) in the PDU session resource notify message carries the first indication information. The access network device may send, to an SMF through an AMF, the PDU session resource notify message carrying the first indication information. The SMF may include the first indication information in NAS signaling, and send the NAS signaling to the terminal device. Optionally, the SMF may forward the first indication information to a PCF, and the PCF sends the first indication information to an AF of the application server.

B3: The access network device may notify the terminal device of the first indication information in a user plane traffic-associated carrying manner.

For example, the access network device may include the selected first indication information in user plane part of GPRS tunneling protocol (user plane part of GPRS tunneling protocol, GTP-U) headers of one or more pieces of uplink data through an NG3 interface, and notify a UPF of the user plane part of GPRS tunneling protocol headers carrying the first indication information. The UPF may send the first indication information to the application server. For example, the UPF may send the first indication information to the application server in a traffic-associated carrying manner. After receiving the first indication information, the application server may send the first indication information to the terminal device, for example, may include the first indication information in an application layer message and send the application layer message to the terminal device. The one or more pieces of uplink data are uplink data of a QoS flow that supports the alternative QoS configuration information, or dummy (dummy) uplink data generated by the access network device to transmit the first indication information. This is not limited.

A module for determining the first alternative QoS configuration information and an implementation of the first indication information vary with a structure of the access network device. In this case, a process in which the access network device internally transmits the first indication information may also vary. The following provides an example for description with reference to cases shown in D1 to D4.

D1: If the access network device is an access network device of a CU/DU separated architecture, and the first QoS configuration information is determined by a DU, the DU may notify a CU of the first indication information through an F1 interface.

If the CU is further separated into a CU-CP and a CU-UP, the CU-CP needs to further notify the CU-UP of the first indication information, or the DU notifies the CU-UP of the first indication information through an F1-u interface (for example, includes the first indication information in a GTP-u header of uplink data of the F1-u interface).

D2: If the access network device is an access network device of an O-RAN architecture, and the first indication information is determined by an nrt-RIC, the nrt-RIC may notify a CU of the first indication information. If the CU is further separated into a CU-CP and a CU-UP, the nrt-RIC needs to notify the CU-UP of the first indication information.

Optionally, the access network device may further send fifth indication information to the application server. Correspondingly, the application server receives the fifth indication information. The fifth indication information indicates the first alternative QoS configuration information. For example, when the access network device sends the fifth indication information to the terminal device, the access network device may further send the fifth indication information to the application server.

For example, the access network device may directly send the fifth indication information to the application server; or the access network device may send the fifth indication information to the application server through a 5GC control plane; or the access network device may send the fifth indication information to the UPF in a user plane traffic-associated carrying manner, and the UPF forwards the fifth indication information to the application server. For a specific process in which the access network device sends the fifth indication information to the application server, refer to the foregoing content in which the access network device sends the fifth indication information to the terminal device. Repeated content is not described again.

It should be understood that the access network device may send the first indication information to the terminal device and send the fifth indication information to the application server in any sequence. For example, the access network device may send the first indication information to the terminal device and send the fifth indication information to the application server at the same time; or the access network device first sends the first indication information to the terminal device and then sends the fifth indication information to the application server; or the access network device first sends the fifth indication information to the application server and then sends the first indication information to the terminal device. This is not specifically limited. The fifth indication information may be the same as the first indication information, or the fifth indication information may be generated based on the first indication information.

S904: The terminal device determines the first RRC parameter based on the first indication information and the first association relationship. S904 is a first implementation in which the terminal device determines the first RRC parameter.

After receiving the first indication information, the terminal device may determine the first alternative QoS configuration information, and determine the first RRC parameter based on the first alternative QoS configuration information and the first association relationship, for example, may use, as the first RRC parameter, an RRC parameter that matches the first alternative QoS configuration information in the first association relationship. Subsequently, the terminal device may activate the first RRC parameter, for example, may use the first RRC parameter to perform air interface transmission with the access network device.

The terminal device may receive second indication information from the access network device, where the second indication information indicates the first association relationship. For a manner in which the access network device sends the second indication information to the terminal device, refer to the foregoing content in which the access network device sends the first indication information to the terminal device. Details are not described herein again. Alternatively, the first association relationship may be preconfigured or predefined for the terminal device. For example, the first association relationship may be preconfigured or predefined by using a protocol.

For example, the second indication information may be carried in an RRC message. For example, if the first association relationship is the content shown in Table 6, and the first indication information indicates that an index of the first alternative QoS configuration information is 2, the terminal device may determine, based on the index of the first alternative QoS configuration information, that the first RRC parameter is SPS2, CG2, or DRX2.

It should be understood that the first indication information and the second indication information may be carried in a same message, or may be carried in different messages.

In addition, the access network device may send the first indication information and the second indication information to the terminal device in any sequence. For example, the access network device sends the first indication information and the second information to the terminal device at the same time, or the access network device first sends the first indication information to the terminal device and then sends the second indication information to the terminal device, or the access network device first sends the second indication information to the terminal device and then sends the first indication information to the terminal device.

In a possible implementation, the terminal device may further obtain a second association relationship (for example, from the access network device or the TMF), or a second association relationship is preconfigured or predefined. The second association relationship indicates an association relationship between one or more pieces of alternative QoS configuration information and one or more service parameters. The second association relationship may include an association relationship between the one or more pieces of alternative QoS configuration information and the one or more service parameters, or an association relationship between identifiers of the one or more pieces of alternative QoS configuration information and the one or more service parameters, or an association relationship between the one or more pieces of alternative QoS configuration information and identifiers of the one or more service parameters, or an association relationship between identifiers of the one or more pieces of alternative QoS configuration information and identifiers of the one or more service parameters. For the identifiers of the one or more pieces of alternative QoS configuration information, refer to the foregoing content. Repeated content is not described again. The identifiers of the one or more service parameters may be represented by values of some or all of the one or more service parameters, or value ranges to which values of some or all of the one or more service parameters belong. This is not specifically limited.

The one or more pieces of alternative QoS configuration information and the one or more service parameters may be in one-to-one correspondence, or may be in one-to-many correspondence, or may be in many-to-one correspondence. This is not specifically limited. The one or more service parameters also include a service parameter corresponding to the first service. The service corresponding to the first QoS flow may be referred to as the first service. One or more tasks required for implementing the first service may be referred to as a first task. The first task may be an AI task, for example, may be a compute task in a scenario in which the terminal device and the application server collaborate, or a compute task in a device-side collaboration scenario in a home/industrial internet of things scenario. This is not specifically limited.

Table 7 is an example of the second association relationship provided in this embodiment of this application.

**Table 7**

| Index of alternative QoS configuration information | Service parameter (including a frame size, in a unit of 8 bits/pixel) |
|---|---|
| 1 (GBR=4 Mbps) | 1K (1920*1080) |
| 2 (GBR=12 Mbps) | 2K (2560*1440) |
| 3 (GBR=20 Mbps) | 4K (3840*2160) |

As shown in Table 7, the second association relationship further includes one or more service parameters associated with one or more pieces of alternative QoS configuration information, for example, a frame of 1K corresponding to alternative QoS configuration information 1, a frame of 2K corresponding to alternative QoS configuration information 2, and a frame of 4K corresponding to alternative QoS configuration information 3.

Table 8 is an example of the second association relationship provided in this embodiment of this application.

**Table 8**

| Index of alternative QoS configuration information | Service parameter (including a frame rate, in a unit of frames per second (frames per second, FPS)) |
|---|---|
| 1 (GBR=4 Mbps) | 30 FPS |
| 2 (GBR=12 Mbps) | 60 FPS |
| 3 (GBR=20 Mbps) | 90 FPS |

As shown in Table 8, the second association relationship includes one or more service parameters associated with one or more pieces of alternative QoS configuration information, for example, a frame rate of 30 FPS corresponding to alternative QoS configuration information 1, a frame rate of 60 FPS corresponding to alternative QoS configuration information 2, and a frame rate of 90 FPS corresponding to alternative QoS configuration information 3.

In a possible design, the terminal device may further determine a first service parameter based on the first alternative QoS configuration information and the second association relationship, and execute the first task based on the first service parameter. For example, when the terminal device activates the first RRC parameter, the terminal device may further determine the first service parameter based on the first alternative QoS configuration information and the second association relationship, and execute the first task based on the first service parameter.

S905: The access network device sends third indication information to the terminal device. Correspondingly, the terminal device receives the third indication information from the access network device. The third indication information indicates the first RRC parameter. S905 is a second implementation in which the terminal device determines the first RRC parameter.

After determining the first RRC parameter based on the third indication information, the terminal device may activate the first RRC parameter. The third indication information may include an index/identifier of the first RRC parameter, which is equivalent to that the third indication information indicates the first RRC parameter by using the index/identifier of the first RRC parameter. The index/identifier of the first RRC parameter may be implemented by using indexes/identifiers of some or all parameters in the first RRC parameter. Alternatively, the third indication information may directly include the first RRC parameter. For example, the third indication information includes a value of each parameter in the first RRC parameter.

The third indication information and the first indication information may be carried in different messages, or the third indication information and the first indication information may be carried in a same message. For example, both the first indication information and the third indication information are carried in DCI or a MAC CE. This is not limited.

In the implementation shown in S905, optionally, before S905, the access network device may further send one or more RRC parameters and an index/identifier of each RRC parameter in the one or more RRC parameters to the terminal device. In this way, the third indication information may indicate only the index/identifier of the first RRC parameter, and the terminal device may determine the first RRC parameter from the one or more RRC parameters based on the index/identifier of the first RRC parameter.

For example, if the access network device determines that the first RRC parameter includes that a CG period is 26.6 ms or a number of CG resources is 10 RBs, the access network device may send the third indication information to the terminal device. The third indication information indicates that the CG period is 26.6 ms, or indicates that the number of CG resources is 10 RBs, or indicates an index/identifier indicating that the CG period is 26.6 ms, or indicates an index/identifier indicating that the number of CG resources is 10 RBs.

In the implementation shown in S905, after receiving the third indication information, the terminal device may parse the third indication information, to determine the first RRC parameter.

It should be understood that S903 and S905 may be performed in any sequence. For example, S903 and S905 may be performed at the same time, or S903 is performed before S905, or S905 is performed before S903. This is not limited.

It should be understood that S904 and S905 are two implementations in which the terminal device determines the first RRC parameter. In a possible embodiment, only S904 may be performed. In another possible implementation, only S905 may be performed.

In this embodiment of the present invention, after adjusting QoS configuration information, the access network device may notify the terminal device of adjusted QoS configuration information. In this way, the terminal device can adjust an RRC parameter in time based on the adjusted QoS configuration information, thereby improving RRC parameter adjustment timeliness, and helping improve effect of air interface transmission between the terminal device and the access network device.

An example in which the access network device uses Manner 2 (that is, the access network device determines the first alternative QoS configuration information based on the network status information and the assistance information of the terminal device) and this embodiment of this application is applicable to the scenario shown in FIG. 4 is used below to describe an interaction process between devices in the communication method shown in FIG. 9.

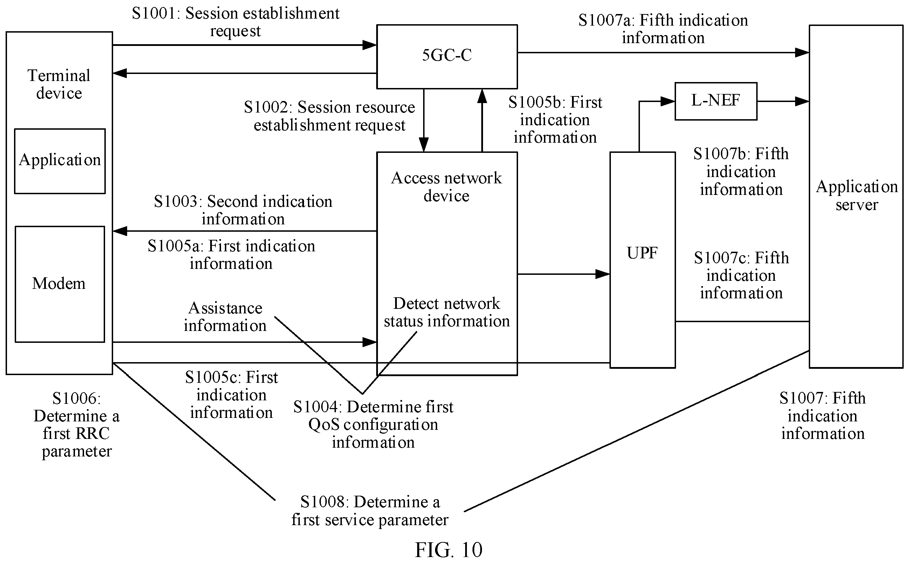

FIG. 10 is a diagram of a communication method according to an embodiment of this application. FIG. 10 shows steps S1001 to S1008, which are separately described below.

S1001: A terminal device sends a session establishment request to a 5GC-C. Correspondingly, the 5GC-C receives the session establishment request from the terminal device.

The session establishment request message may include PDU session-related information, for example, at least one of a PDU session ID, an ID of the terminal device, a media access control (media access control, MAC) address or an internet protocol (internet protocol, IP) address of the terminal device, a DNN, or S-NSSAI. The 5GC-C identifies a PDU session based on the PDU session-related information, and determines whether the PDU session has a QoS flow that supports more than one alternative QoS configuration information. For the QoS flow that supports more than one piece of alternative QoS configuration information, the 5GC-C obtains each piece of alternative QoS configuration information locally or from an AF. In this embodiment of this application, an example in which the QoS flow that supports more than one piece of alternative QoS configuration information includes a first QoS flow is used for description. In this assumption, the 5GC-C may obtain, locally or from the AF, at least one piece of alternative QoS configuration information corresponding to the first QoS flow.

Optionally, each piece of alternative QoS configuration information corresponds to a task division mode between the terminal device and an application server, a bit rate of a service, a resolution of a service, or a QoS requirement of a frame rate of a service. For example, the task division mode between the terminal device and the application server includes enabling or disabling a reflection rendering and/or DDGI rendering function on an application server side, or the task division mode between the terminal and the application server includes enabling or disabling a reflection rendering and/or DDGI rendering function on the terminal device.

S1002: The 5GC-C sends the session resource establishment request to an access network device. Correspondingly, the access network device receives the session establishment request from the 5GC-C.

The 5GC-C sends the session resource establishment request to the access network device, where the session resource establishment request may carry the at least one piece of alternative QoS configuration information. Optionally, when configuring the at least one piece of alternative QoS configuration information for the access network device, the 5GC-C may further send notification control (notification control) information (or may be referred to as active adjustment indication information), where the notification control information may also be carried in the session resource establishment request and notified to the access network device. The notification control information indicates that, after adjusting QoS configuration information of the first QoS flow service, the access network device needs to notify the 5GC-C, a UPF, or the terminal device of adjusted QoS configuration information. It should be understood that, after the access network device obtains the at least one piece of alternative QoS configuration information, for content in which the access network device internally transmits the at least one piece of alternative QoS configuration information, refer to the foregoing content in which the access network device internally transmits the first indication information. Details are not described herein again.

In another possible implementation, the at least one piece of alternative QoS configuration information may be carried in a session resource establishment adjustment message. Optionally, the session resource establishment adjustment message further includes notification control information (or may be referred to as active adjustment indication information). The session resource establishment adjustment message is used to adjust a session resource, and may be sent by the 5GC-C to the access network device in a process of establishing and adjusting a session resource between the 5GC-C and the access network device.

After S1002, the access network device may perform mapping from a QoS flow to a data radio bearer (data radio bearer, DRB), and exchange DRB configuration-related air interface signaling with the terminal device. The QoS flow is a QoS flow that supports at least one piece of alternative QoS configuration information, and includes the first QoS flow. Correspondingly, the DRB may also support a configuration of the at least one piece of alternative QoS configuration information, or it may be understood that the DRB may also perform data transmission based on QoS configuration information selected by the access network device. In this way, an RRC parameter that is between the terminal device and the access network device and that is associated with the DRB may be updated based on the selected QoS configuration information (for example, first QoS configuration information).

It should be understood that S1001 and S1002 are examples of establishing a PDU session. Actually, there are a plurality of manners of establishing a PDU session. For example, the 5GC-C may initiate a PDU session establishment process. This is not specifically limited in this embodiment of this application.

In a possible design, when configuring the at least one piece of alternative QoS configuration information for the access network device, the 5GC-C may further configure priority information of the at least one piece of alternative QoS configuration information for the access network device. For example, the session resource establishment request or the session resource establishment adjustment message carries the at least one piece of alternative QoS configuration information and the priority information of the at least one piece of alternative QoS configuration information.

S1003: The access network device sends second indication information to the terminal device. Correspondingly, the terminal device receives the second indication information from the access network device. For content of the second indication information, refer to the foregoing content of the second indication information in FIG. 9. Repeated content is not described again. For example, for content of sending the second indication information by the access network device to the terminal device, refer to the foregoing content of sending the second indication information in FIG. 9. Repeated content is not described again. When the access network device directly sends the second indication information to the terminal device, the access network device may send the second indication information to the terminal device.

S1004: The access network device determines the first QoS configuration information.

The access network device selects appropriate QoS configuration information based on perceived network status information, assistance information from the terminal device, and the like. In this embodiment of this application, an example in which the access network device selects the first QoS configuration information is used for description.

S1005: The access network device sends first indication information to the terminal device. Correspondingly, the terminal device receives the first indication information from the access network device.

For content of the first indication information, refer to the foregoing content of the first indication information in FIG. 9. Repeated content is not described again. S1005 may be implemented in a plurality of manners, for example, may be implemented in three manners: S1005a (that is, the access network device directly sends the first indication information to the terminal device), S1005b (that is, the access network device sends the first indication information to the terminal device through the 5GC-C), and S1005c (that is, the access network device sends the first indication information to the terminal device through the UPF). For content of the three implementations, refer to the foregoing content in FIG. 9. Repeated content is not described again. When the access network device directly sends the first indication information to the terminal device, the access network device may send the first indication information to the terminal device.

S1006: The terminal device determines a first RRC parameter.

The terminal device may determine the first RRC parameter based on the first indication information and a first association relationship. Alternatively, the access network device may send third indication information to the terminal device, so that the terminal device can determine the first RRC parameter based on the third indication information. For content of the first association relationship, content of the third indication information, and content of determining the first RRC parameter by the terminal device, refer to the foregoing content in FIG. 9. Repeated content is not described again.

S1007: The application server obtains fifth indication information. The fifth indication information indicates the first alternative QoS configuration information. For a manner in which the fifth indication information indicates the first alternative QoS configuration information, refer to the foregoing content in which the first indication information indicates the first alternative QoS configuration information. Details are not described herein again. For related content of the fifth indication information, refer to the foregoing content of the fifth indication information in FIG. 9. Repeated content is not described again.

S1007 may be implemented in a plurality of manners, for example, may be implemented in three manners: S1007a (that is, the application server receives the fifth indication information from the access network device through the 5GC-C), S1007b (that is, the application server receives the fifth indication information from the access network device through an L-NEF), and S1007c (that is, the application server receives the fifth indication information from the access network device through the UPF), which are separately described below.

In S1007a, after S1005c or after the access network device indicates the first alternative QoS configuration information to the UPF, the UPF detects GTP-U header information of uplink data to obtain the first indication information, and notifies the application server of the fifth indication information through an NEF or the L-NEF, and an application programming interface (application programming interface, API).

In S1007b, after S1005c or after the access network device indicates the first alternative QoS configuration information to the UPF, the UPF may further include the fifth indication information in a real-time transport protocol (real-time transport protocol, RTP) data packet header and send the RTP data packet header to the application server. In addition, if a transport layer protocol such as a quick UDP internet connection (quick UDP internet connection, QUIC) or a real-time transport control protocol (real-time transport control protocol, RTCP) is used for an uplink data flow, the UPF may also modify a corresponding QUCI or RTCP data packet header to carry the fifth indication information.

In S1007c, after S1005b or after the access network device indicates the first alternative QoS configuration information to the 5GC-C, the 5GC-C may send the fifth indication information to the application server.

In another possible implementation, after S1005b, an access stratum (access stratum, AS) of the terminal device submits, to an application of the terminal device, the first alternative QoS configuration information indicated by the received first indication information. The terminal device may indicate the fifth indication information to the application server by using the application. Optionally, the terminal device may include the fifth indication information in metadata (metadata) of the application, to notify the application server.

S1008: The terminal device and/or the application server determine/determines a first service parameter.

The terminal device may determine the first service parameter based on the first alternative QoS configuration information indicated by the first indication information and a second association relationship. Optionally, the AS of the terminal device submits, to the application of the terminal device, the first alternative QoS configuration information indicated by the received first indication information, and the application of the terminal device determines the first service parameter based on the first alternative QoS configuration information and the second association relationship; and/or the application server determines the first service parameter based on the first alternative QoS configuration information indicated by the fifth indication information and the second association relationship.

S1008 may be performed by the terminal device, or may be performed by the application server, or may be collaboratively performed by the terminal device and the application server.

For example, the application in the terminal device or the application server may determine the first service parameter based on a change of newly selected QoS configuration information (for example, the first alternative QoS configuration information) compared with originally selected QoS configuration information. For example, if a change of PDBs or GBRs corresponding to the two pieces of consecutively selected QoS configuration information exceeds a specific threshold, a corresponding task division mode, application bit rate, resolution, or frame rate between the terminal and the cloud server is adjusted. Adjusting the corresponding task division mode between the terminal and the cloud server may be that the terminal device or the application server enables or disables a reflection rendering and/or DDGI rendering function. For example, if the GBR corresponding to the selected QoS configuration information is greater than a specific threshold or the PDB is less than a specific threshold, the terminal device or the application server may enable the reflection rendering or DDGI rendering function, or increase to the corresponding bit rate, frame rate, or resolution.

For example, in a device-cloud collaboration AR rendering scenario, for adjustment of a cloud processing task volume, the access network device may send the first indication information to the terminal device, and then the terminal device determines, based on the first alternative QoS configuration information, that the cloud processing task volume needs to be adjusted, and indicates, by using metadata (metadata), the application server to perform corresponding processing task volume adjustment, for example, disable DDGI rendering. Similarly, the access network device may first notify the selected fifth indication information to the application server, and then the application server notifies the terminal device of the first alternative QoS configuration information by using the metadata, so that the terminal device can adjust an uplink service based on the first alternative QoS configuration information.

It should be understood that S1001 to S1003, and S1007 and S1008 are all optional steps.

In this embodiment of this application, the access network device may adjust a corresponding air interface transmission configuration parameter based on dynamic QoS switching, select appropriate alternative QoS configuration information based on current network status information, and simultaneously indicate an application to adjust a corresponding service parameter; and the access network device triggers the terminal device in time to adjust an RRC parameter, so that air interface transmission immediately adapts to a change in a traffic volume and a periodicity of an application service. In this way, successful service data transmission can be ensured, and an air interface resource and power of the terminal device can be saved.

An example in which the access network device uses Manner 3 (that is, the access network device determines the first alternative QoS configuration information based on the first traffic-associated information and the network status information) and this embodiment of this application is applicable to the scenario shown in FIG. 5 is used below to describe an interaction process between devices in the communication method shown in FIG. 9.

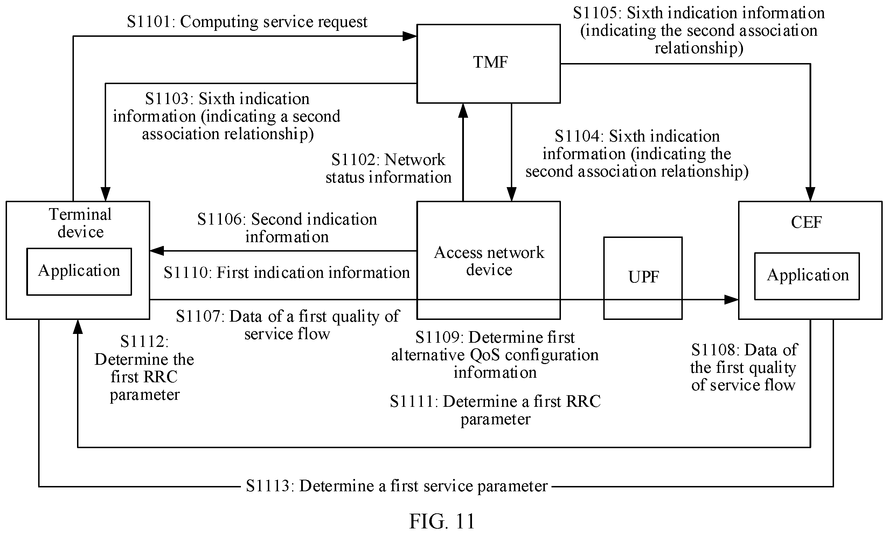

FIG. 11 is a diagram of a communication method according to an embodiment of this application. FIG. 11 shows steps S1101 to S1113, which are separately described below.

S1101: A terminal device sends a computing service request (computing service request) to a TMF. Correspondingly, the TMF receives the computing service request from the terminal device.

The computing service request may carry computing service identifier information and/or one or more pieces of alternative QoS configuration information corresponding to a task. The task includes a first task corresponding to a first QoS flow. Therefore, the one or more pieces of alternative QoS configuration information also include at least one piece of alternative QoS configuration information corresponding to the first QoS flow. The at least one piece of alternative QoS configuration information of the first task may further include a QoS parameter of each subtask in one or more subtasks included in the first task. A QoS parameter of one subtask may include a QoS parameter such as an input/output data rate or throughput.

When the computing service request does not carry the one or more pieces of alternative QoS configuration information, the TMF may negotiate with a core network function (for example, a PCF) based on the service identifier information of the computing service request to obtain the one or more pieces of alternative QoS configuration information.

S1102: The TMF perceives network status information.

The TMF perceives network status information between UE and a gNB, or the TMF may obtain network status information from an access network device. For content of the network status information, refer to the foregoing content. Details are not described again.

S1103: The TMF sends sixth indication information to the terminal device. Correspondingly, the terminal device receives the sixth indication information from the TMF. The sixth indication information indicates a second association relationship. For content of the second association relationship, refer to the foregoing content of the second association relationship in FIG. 9. Repeated content is not described again.

For example, the TMF may determine an association relationship (referred to as the second association relationship below) between one or more pieces of alternative QoS configuration information and one or more service parameters. The service parameter includes a task assignment mode, and the task assignment mode indicates a plurality of subtasks of the first task that a CEF and the terminal device each need to execute. For example, a DDGI or reflection rendering function in cloud gaming is used as a compute task. The one or more service parameters may include a service parameter 1 (the CEF enables the DDGI or reflection rendering function, and the terminal device disables the DDGI or reflection rendering function) and a service parameter 2 (the CEF disables the DDGI or reflection rendering function, and the terminal device enables the DDGI or reflection rendering function). The TMF may send, to the terminal device, the sixth indication information indicating the second association relationship.

S1104: The TMF sends the sixth indication information to the access network device. Correspondingly, the access network device receives the sixth indication information from the TMF.

The TMF sends, to the access network device, the sixth indication information indicating the second association relationship, or the TMF may directly send the one or more pieces of alternative QoS configuration information to the access network device. In FIG. 11, an example in which the TMF sends the sixth indication information to the access network device is used for illustration.

Optionally, the TMF determines the sixth indication information based on the network status information and the computing service request message.

Optionally, the TMF may further send, to the access network device, policy information (or may be referred to as condition information) used to adjust alternative QoS. The policy information may be predetermined or preconfigured in the TMF, or determined by the TMF. The policy information is, for example, one or more QoS adjustment thresholds. When detecting that a deviation between an actual transmission capability of a network and current QoS configuration information is greater than or less than one of the specified thresholds, the access network device adjusts a currently selected QoS configuration to alternative QoS configuration information of a higher or lower transmission capability.

A PDB is used as an example. The TMF sets the adjustment thresholds to 5 ms and -5 ms. When detecting that a deviation between an actual packet transmission delay and a PDB delay requirement in current QoS configuration information is greater than 5 ms, the access network device adjusts the currently selected QoS configuration to alternative QoS with a larger PDB. When detecting that a deviation between an actual packet transmission delay and a PDB delay requirement in a current QoS parameter is less than -5 ms, the access network device adjusts the currently selected QoS configuration information to alternative QoS configuration information with a smaller PDB.

S1105: The TMF sends the sixth indication information to the CEF. Correspondingly, the CEF receives the sixth indication information from the TMF. For content of the sixth indication information, refer to the foregoing content of the sixth indication information in S1103. Repeated content is not described again.

S1106: The access network device sends second indication information to the terminal device. Correspondingly, the terminal device receives the second indication information from the access network device.

After receiving the one or more alternative QoS configurations, the access network device may determine a first association relationship, and indicate the first association relationship to the terminal device by using the second indication information. For content of the first association relationship, refer to the foregoing content of the first association relationship in FIG. 9. Repeated content is not described again.

S1107: The terminal device sends data of the first quality of service flow to the CEF. Correspondingly, the CEF receives the data of the first quality of service flow from the terminal device. The data of the first quality of service flow may include some or all information of the first traffic-associated information. For content of the first traffic-associated information, refer to the foregoing content in FIG. 9. Repeated content is not described again.

S1108: The CEF sends the data of the first quality of service flow to the terminal device. Correspondingly, the terminal device receives the data of the first quality of service flow from the CEF. The data of the first quality of service flow may include some or all information of the first traffic-associated information. For content of the first traffic-associated information, refer to the foregoing content in FIG. 9. Repeated content is not described again. Step S1108 may occur when step S1107 does not occur, or step S1107 may occur when step S1108 does not occur. That a step does not occur may be understood as not performing the step, and that a step occurs may be understood as performing the step. For example, that S1008 occurs may be performing S1008.

Optionally, the TMF may further determine a third association relationship, where the third association relationship represents an association relationship between one or more pieces of traffic-associated information and one or more pieces of alternative QoS configuration information. The TMF may send fourth indication information to the access network device, to indicate the third association relationship. Optionally, the fourth indication information and the sixth indication information that is sent to the access network device may be carried in a same message, or may be carried in different messages. In addition, the TMF may send the sixth indication information and the fourth indication information to the access network device in any sequence. This is not specifically limited. For an example of the third association relationship, refer to the example shown in Table 1 or Table 2.

S1109: The access network device determines first alternative QoS configuration information.

If the TMF indicates the third association relationship to the access network device, the access network device may determine the first alternative QoS configuration information based on the third association relationship and the first traffic-associated information. Alternatively, the access network device may determine the first alternative QoS configuration information based on the first traffic-associated information and the network status information. For specific content of determining the first alternative QoS configuration information, refer to the foregoing content of Manner 3 in FIG. 9.

S1110: The access network device sends first indication information to the terminal device. Correspondingly, the terminal device receives the first indication information from the access network device. For content of the first indication information, refer to the foregoing content of the first indication information in FIG. 9. Repeated content is not described again.

S1111: The access network device determines a first RRC parameter. For content of determining the first RRC parameter by the access network device, refer to the foregoing content of determining the first RRC parameter by the access network device in FIG. 9. Repeated content is not described again.

S1112: The terminal device determines a first RRC parameter. For content of determining the first RRC parameter by the terminal device, refer to the foregoing content of determining the first RRC parameter by the terminal device in FIG. 9. Repeated content is not described again.

S1113: The terminal device and/or the CEF determine/determines a first service parameter.

For content of determining the first service parameter, refer to the foregoing content of determining the first service parameter in FIG. 9. Repeated content is not described again. For example, the terminal device may determine the first service parameter based on the first alternative QoS configuration information and the second association relationship.

It should be understood that S1101 to S1108 and S1113 are all optional steps.

This embodiment of this application provides a procedure in which a network dynamically switches QoS and activates an RRC parameter group based on traffic-associated information. The access network device may select appropriate alternative QoS configuration information based on the traffic-associated information and current network status information, and indicate the terminal device to activate a corresponding RRC parameter. The terminal device and the CEF may execute a subtask corresponding to the alternative QoS configuration information, so that a service can match an air interface transmission configuration in real time. This ensures application data transmission, improves air interface resource utilization, and improves user experience.

It should be understood that, in embodiments of this application, names of some messages that have been used in a 3GPP NR system are used. However, during actual implementation, the names of the messages may change. This is not specifically limited. In embodiments of this application, alternative QoS configuration information is described by using a QoS flow as a granularity, but this is not limited to being applicable only to a QoS flow granularity, or may be applicable to a PDU session, a slice, a task granularity, or the like. This is not limited. In embodiments of this application, an example in which the access network device determines to select the first alternative QoS configuration information is used for description. Actually, a network element in the 5GC may alternatively determine the first alternative QoS configuration information.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

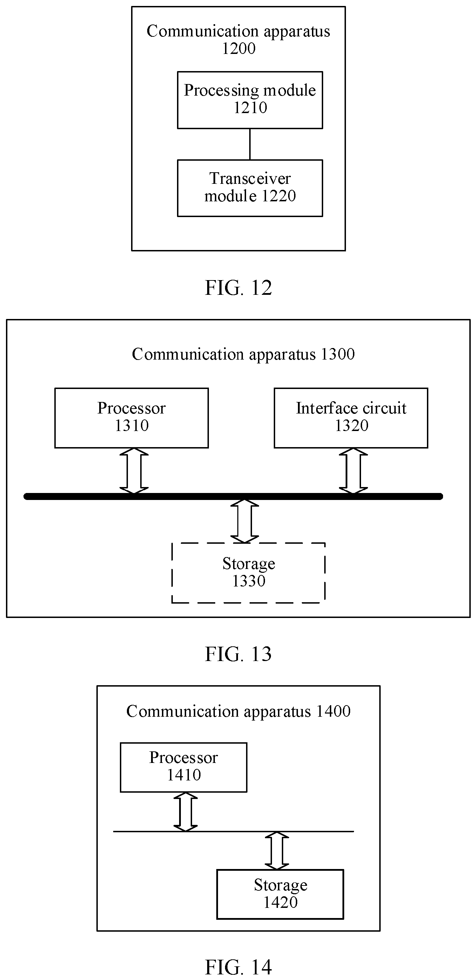

FIG. 12 is a diagram of a structure of a possible communication apparatus according to an embodiment of this application. These communication apparatuses may be configured to implement the functions of the terminal or the base station in the foregoing method embodiments. Therefore, beneficial effects of the foregoing method embodiments can also be implemented. In embodiments of this application, the communication apparatus may be the terminal device in any one of FIG. 1, FIG. 2, FIG. 4, and FIG. 5 to FIG. 8, or may be the access network device in any one of FIG. 2 and FIG. 4 to FIG. 8, or may be the TMF in FIG. 5, or may be a module (such as a chip) used in the terminal device, the access network device, or the TMF.

As shown in FIG. 12, the communication apparatus 1200 includes a processing module 1210 and a transceiver module 1220. The communication apparatus 1200 is configured to implement functions such as the terminal device, the access network device, or the TMF in the method embodiment shown in FIG. 9, FIG. 10, or FIG. 11.

In a first embodiment, the communication apparatus 1200 is configured to implement the functions of the terminal device in the method embodiment shown in FIG. 9, FIG. 10, or FIG. 11.

For example, the communication apparatus 1200 is configured to implement the functions of the terminal device in the method embodiment shown in FIG. 9. In this case, the transceiver module 1220 may receive first indication information and receive third indication information under processing of the processing module 1210. Alternatively, the transceiver module 1220 may receive first indication information under processing of the processing module 1210, and the processing module 1210 may perform step S904.

Alternatively, the communication apparatus 1200 is configured to implement the functions of the terminal device in the method embodiment shown in FIG. 10. In this case, the transceiver module 1220 may receive first indication information, and the processing module 1210 may be configured to perform step S1006. Optionally, the transceiver module 1220 may be further configured to receive second indication information, send assistance information, send a session establishment request, and the like, and the processing module 1210 may be further configured to determine a first service parameter and the like.

Alternatively, the communication apparatus 1200 is configured to implement the functions of the terminal device in the method embodiment shown in FIG. 11. In this case, the transceiver module 1220 may receive first indication information, and the processing module 1210 may perform step S1112. Optionally, the transceiver module 1220 is further configured to send a computing service request, send data of a first quality of service flow, receive second indication information and fifth indication information, and the like.

In a second embodiment, the communication apparatus 1200 is configured to implement the functions of the access network device in the method embodiment shown in FIG. 9, FIG. 10, or FIG. 11.

For example, the communication apparatus 1200 is configured to implement the functions of the access network device in the method embodiment shown in FIG. 9. In this case, the transceiver module 1220 may be configured to send first indication information, and send third indication information, and the processing module 1210 may perform steps S901 and S902. Alternatively, the transceiver module 1220 may send first indication information under processing of the processing module 1210, and the processing module 1210 may perform steps S901 and S902.

Alternatively, the communication apparatus 1200 is configured to implement the functions of the access network device in the method embodiment shown in FIG. 10. In this case, the transceiver module 1220 may send first indication information, and the processing module 1210 may be configured to perform step S1004. Optionally, the transceiver module 1220 may be further configured to send second indication information, receive assistance information, receive a session resource establishment request, and the like.

Alternatively, the communication apparatus 1200 is configured to implement the functions of the access network device in the method embodiment shown in FIG. 11. In this case, the transceiver module 1220 may send first indication information, and the processing module 1210 may perform steps S1109 and S1111. Optionally, the transceiver module 1220 is further configured to send second indication information, send network status information, receive fifth indication information, and the like.

In a third embodiment, the communication apparatus 1200 is configured to implement the functions of the TMF in the method embodiment shown in FIG. 11. In this case, the processing module 1210 may be configured to determine a third association relationship, and the transceiver module 1220 may be configured to send fourth indication information and the like. Optionally, the transceiver module 1220 is further configured to receive a computing service request, send sixth indication information, and the like.

For specific content of the involved information and steps, refer to the content described in FIG. 9 to FIG. 11. No repeated content is listed.

FIG. 13 is a diagram of a structure of a communication apparatus according to an embodiment of this application. As shown in FIG. 13, the communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a storage 1330, configured to store instructions executed by the processor 1310, or store input data required by the processor 1310 to run instructions, or store data generated after the processor 1310 runs instructions.

When the communication apparatus 1300 is configured to implement the method shown in any one of FIG. 9 to FIG. 11, the processor 1310 is configured to implement functions of the processing module 1210, and the interface circuit 1320 is configured to implement functions of the transceiver module 1220.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a module used in an access network device, the module in the access network device implements functions of the access network device in the foregoing method embodiments. The module in the access network device receives information from another module (for example, a radio frequency module or an antenna) in the access network device, where the information is sent by a terminal device to the access network device. Alternatively, the module in the access network device sends information to another module (for example, a radio frequency module or an antenna) in the access network device, where the information is sent by the access network device to a terminal device. The module in the access network device herein may be a baseband chip in the access network device, or may be a DU or another module. The DU herein may be a DU in an open radio access network (open radio access network, O-RAN) architecture.

An embodiment of this application provides another example of a communication apparatus. The communication apparatus includes at least one processor and at least one storage. The at least one processor is coupled to the at least one storage. The at least one storage is configured to store instructions. When the instructions are executed by the at least one processor, the communication apparatus is enabled to perform the method in the foregoing embodiments. For example, the communication apparatus includes one processor and one storage. FIG. 14 is a diagram of a structure of a communication apparatus. As shown in FIG. 14, the communication apparatus 1400 includes one processor 1410 and one storage 1420. The processor 1410 is coupled to the storage 1420. The storage 1420 stores instructions. When the instructions stored in the storage 1420 are executed by the processor 1410, the communication apparatus 1400 performs the method performed by the network device in the foregoing embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like. The storage in embodiments of this application may include a volatile memory (volatile memory), for example, a random access memory (random access memory, RAM). The storage may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a chip system. The chip system includes a processor and an interface. The processor is configured to invoke instructions from the interface and run the instructions. When the processor executes the instructions, any one of the foregoing communication methods, for example, the communication method shown in any one of FIG. 9 to FIG. 11, is implemented.

An embodiment of this application provides a computer-readable storage medium. The computer-readable storage medium is configured to store a computer program or instructions. When the computer program or the instructions are run, any one of the foregoing communication methods, for example, the communication method shown in any one of FIG. 9 to FIG. 11, is implemented.

An embodiment of this application provides a computer program product including instructions. When the instructions are run on a computer, any one of the foregoing communication methods, for example, the communication method shown in any one of FIG. 9 to FIG. 11, is implemented.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device, wherein the method comprises:
receiving first indication information, wherein the first indication information indicates first alternative quality of service configuration information, and the first alternative quality of service configuration information indicates one or more communication indicators that the first quality of service flow needs to meet; and
determining a first radio resource control parameter based on the first indication information and a first association relationship, wherein the first association relationship indicates an association relationship between one or more pieces of alternative quality of service configuration information and one or more radio resource control parameters, the one or more pieces of alternative quality of service configuration information comprise the first alternative quality of service configuration information, and the one or more radio resource control parameters comprise the first radio resource control parameter.

2. The method according to claim 1, wherein the method further comprises:
receiving second indication information from an access network device, wherein the second indication information indicates the first association relationship.

3. The method according to claim 1 or 2, wherein
sending data of the first quality of service flow to the access network device, wherein the data of the first quality of service flow comprises first traffic-associated information, the first traffic-associated information comprises experienced quality of service information and/or service feature information, the experienced quality of service information indicates an actual transmission parameter of the first quality of service flow in a historical time period, and the service feature information indicates an attribute of a first service corresponding to the first quality of service flow.

4. The method according to any one of claims 1 to 3, wherein
sending assistance information of the terminal device, wherein the assistance information indicates resource usage of the terminal device.

5. The method according to any one of claims 1 to 4, wherein the method further comprises:
determining a first service parameter based on the first alternative quality of service configuration information, wherein the first service parameter is a parameter of the first service corresponding to the first quality of service flow.

6. The method according to claim 5, wherein determining the first radio resource control parameter based on the first indication information and the first association relationship comprises:
determining the first service parameter based on the first alternative quality of service configuration information and a second association relationship, wherein the second association relationship indicates an association relationship between at least one piece of alternative quality of service configuration information and at least one service parameter, the at least one piece of alternative quality of service configuration information comprises the first alternative quality of service configuration information, and the at least one service parameter comprises the first service parameter.

7. The method according to any one of claims 1 to 6, wherein
the first association relationship comprises one or more identifiers and the association relationship with the one or more radio resource control parameters, and the one or more identifiers are identifiers of the one or more pieces of alternative quality of service configuration information.

8. The method according to claim 7, wherein an identifier of one piece of alternative quality of service configuration information comprises at least one of the following:
a quality of service flow identifier corresponding to the one piece of alternative quality of service configuration information;
an index of the one piece of alternative quality of service configuration information; or
an index of at least one communication indicator in one or more communication indicators indicated by the one piece of alternative quality of service configuration information.

9. The method according to any one of claims 1 to 8, wherein the first radio resource control parameter comprises at least one of the following:
a semi-persistent scheduling parameter;
a configured grant scheduling resource parameter; or
a discontinuous reception configuration parameter.

10. A communication method, comprising:
determining first alternative quality of service configuration information from at least one piece of alternative quality of service configuration information of a first quality of service flow, wherein the first alternative quality of service configuration information is quality of service configuration information re-determined by the first quality of service flow, and indicates one or more communication indicators that the first quality of service flow needs to meet;
determining a first radio resource control parameter based on the first alternative quality of service configuration information and a first association relationship, wherein the first association relationship indicates an association relationship between one or more pieces of alternative quality of service configuration information and one or more radio resource control parameters, the one or more pieces of alternative quality of service configuration information comprise the first alternative quality of service configuration information, and the one or more radio resource control parameters comprise the first radio resource control parameter; and
sending first indication information, wherein the first indication information indicates the first alternative quality of service configuration information.

11. The method according to claim 10, wherein
sending third indication information to a terminal device, wherein the third indication information indicates the first radio resource control parameter.

12. The method according to claim 10 or 11, wherein determining the first alternative quality of service configuration information from the at least one piece of alternative quality of service configuration information of the first quality of service flow comprises:
receiving data of the first quality of service flow, wherein the data of the first quality of service flow comprises first traffic-associated information, the first traffic-associated information comprises experienced quality of service flow information and/or service feature information, the experienced quality of service information indicates an actual transmission parameter of the first quality of service flow in a historical time period, and the service feature information indicates an attribute of a first service corresponding to the first quality of service flow; and
determining the first alternative quality of service configuration information based on the first traffic-associated information.

13. The method according to claim 10 or 11, wherein determining the first alternative quality of service configuration information based on the first traffic-associated information comprises:
determining the first alternative quality of service configuration information based on the first traffic-associated information and a third association relationship, wherein the third association relationship comprises an association relationship between at least one piece of alternative quality of service configuration information and at least one piece of traffic-associated information, the at least one piece of alternative quality of service configuration information comprises the first alternative quality of service configuration information, and the at least one piece of traffic-associated information comprises the first traffic-associated information; or
determining the first alternative quality of service configuration information based on the first traffic-associated information, network status information, and the at least one piece of alternative quality of service configuration information, wherein the network status information comprises information about the one or more communication indicators that a network reaches or can support.

14. The method according to claim 10 or 11, wherein determining the first alternative quality of service configuration information from the at least one piece of alternative quality of service configuration information of the first quality of service flow comprises:
receiving assistance information of the terminal device, wherein the assistance information indicates resource usage of the terminal device; and
determining the first alternative quality of service configuration information based on the assistance information, network status information, and the at least one piece of alternative quality of service configuration information, wherein the network status information comprises information about the one or more communication indicators that a network reaches or can support.

15. The method according to any one of claims 10 to 14, wherein
the first association relationship comprises one or more identifiers and the association relationship with the one or more radio resource control parameters, and the one or more identifiers are identifiers of the one or more pieces of alternative quality of service configuration information.

16. The method according to claim 15, wherein an identifier of one piece of alternative quality of service configuration information comprises at least one of the following:
a quality of service flow identifier corresponding to the one piece of alternative quality of service configuration information;
an index of the one piece of alternative quality of service configuration information; or
an index of at least one communication indicator in one or more communication indicators indicated by the one piece of alternative quality of service configuration information.

17. The method according to any one of claims 10 to 16, wherein the first radio resource control parameter comprises at least one of the following:
a semi-persistent scheduling parameter;
a configured grant scheduling resource parameter; or
a discontinuous reception configuration parameter.

18. A communication method, comprising:
receiving at least one piece of alternative quality of service configuration information corresponding to a first quality of service flow, wherein the alternative quality of service configuration information indicates one or more communication indicators that the first quality of service flow needs to meet;
determining a third association relationship, wherein the third association relationship comprises an association relationship between at least one piece of alternative quality of service configuration information and at least one piece of traffic-associated information, one piece of traffic-associated information comprises experienced quality of service flow information and/or service feature information, the experienced quality of service information indicates an actual transmission parameter of the first quality of service flow in a historical time period, and the service feature information indicates an attribute of a first service corresponding to the first quality of service flow; and
sending fourth indication information, wherein the fourth indication information indicates the third association relationship.

19. The method according to claim 18, wherein one piece of alternative quality of service configuration information comprises at least one of an alternative quality of service parameter, an input data rate, and an output data rate corresponding to each of a plurality of subtasks, and the plurality of subtasks belong to a task comprised in the first service.

20. A communication apparatus, comprising:
a module configured to perform the method according to any one of claims 1 to 9;
a module configured to perform the method according to any one of claims 10 to 17; or
a module configured to perform the method according to claim 18 or 19.

21. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 9, the method according to any one of claims 10 to 17, or the method according to claim 18 or 19 by using a logic circuit or by executing code instructions.

22. A computer program product comprising instructions, wherein when the instructions are run by a communication apparatus, the communication apparatus is enabled to perform the method according to any one of claims 1 to 9, the method according to any one of claims 10 to 17, or the method according to claim 18 or 19.

23. A computer-readable storage medium, wherein the storage medium stores a computer program or instructions, and when the computer program or the instructions are executed by a communication apparatus, the method according to any one of claims 1 to 9, the method according to any one of claims 10 to 17, or the method according to claim 18 or 19 is implemented.
